# EUROPEAN PATENT APPLICATION

(11) **EP 4 757 040 A1**
(43) Date of publication of application: **10.06.2026**
(21) Application number: 23953656.8
(22) Date of filing: 28.09.2023
(51) Int. Cl.: H01M 50/342, H01M 10/0525, H01M 10/054

(54) **PRESSURE RELIEF COMPONENT, BATTERY CELL, BATTERY, AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN); CAI, Runchen, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2023/122559
(87) International publication number: WO 2025/065507

(57) **Abstract**

A pressure relief component, a battery cell, a battery, and an electric device, which belong to the technical field of batteries. The pressure relief component is used for a battery cell; the pressure relief component is provided with at least two pressure relief notches, each pressure relief notch and connecting lines at the two ends of said notch enclosingly form a first region, the plurality of first regions are arranged at intervals, and a connecting line of at least one first region is located on the side of the first region near the center of the pressure relief component. The described design allows an opening having a larger area to be formed when the pressure relief component opens while also lowering the risk of a battery short circuit caused by the connection of the pressure relief component with another component in the battery. The risk of the area of the formed opening when the pressure relief component opens being too small due to a part within a first region being blocked by another part of the housing of the battery cell is likewise reduced, and the reliability of the battery is improved.

## Description

### TECHNICAL FIELD

This application relates to the field of battery technologies, and in particular to a pressure relief component, a battery cell, a battery, and an electric device.

### BACKGROUND

Batteries are widely used in electronic devices, such as electric scooters, electric vehicles, electric aircraft, and electric ships.

How to improve the reliability of batteries is an urgent problem to be solved in battery technology.

### SUMMARY

In view of the above problems, this application provides a pressure relief component, a battery cell, a battery, and an electric device, which can improve the reliability of the battery.

According to a first aspect, this application provides a pressure relief component used for a battery cell, where the pressure relief component is provided with at least two pressure relief notches, each pressure relief notch and connecting lines at two ends of the pressure relief notch enclose a first region, a plurality of first regions are arranged at intervals, and a connecting line of at least one first region is located on a side of the first region adjacent to the center of the pressure relief component.

In the technical solution of the embodiments of this application, when the battery cell relieves pressure, the cracking of the pressure relief notches causes the pressure relief component to form an opening for gas to pass through smoothly. The pressure relief component is provided with at least two pressure relief notches, each pressure relief notch and connecting lines at two ends of the pressure relief notch enclose a first region, and a plurality of first regions are arranged at intervals. Such a design can enable the pressure relief component, when being opened, to form an opening with a larger area while reducing the risk of partial overlap of the pressure relief component with other components in the battery leading to short circuit of the battery, thereby improving the reliability of the battery. The connecting line of at least one first region is located on the side of the first region adjacent to the center of the pressure relief component, which can reduce the risk that the portion of the pressure relief component located within the first region is blocked by other portions of the housing of the battery cell when the pressure relief component is activated, resulting in an excessively small opening area.

In some embodiments, the plurality of first regions are arranged at intervals around the center of the pressure relief component, and each pressure relief notch is bent in a direction away from the center of the pressure relief component. Such a design can reduce the risk that the portion of the pressure relief component located within the first region is blocked by the portion within an adjacent first region when the pressure relief component is activated, resulting in an excessively small opening area.

In some embodiments, a thickness of the pressure relief component at the pressure relief notch is T₁, satisfying: T₁ ≥ 0.03 mm. Setting the thickness of the pressure relief component at the pressure relief notch within a reasonable range enables the pressure relief notch to crack more likely when the battery cell relieves pressure, thereby enabling smooth pressure relief of the battery cell.

In some embodiments, the pressure relief component is provided with at least two connecting notches, the connecting notches are in one-to-one correspondence with the pressure relief notches, two ends of each pressure relief notch are connected by the connecting notch, and a thickness of the pressure relief component at the connecting notch is greater than a thickness of the pressure relief component at the pressure relief notch. When the battery cell relieves pressure, the pressure relief notches crack prior to the connecting notch, and a portion of the pressure relief component may open along the connecting notch or flip with the connecting notch as an axis, shortening the time required to form an opening of a predetermined area and thereby enabling rapid pressure relief.

In some embodiments, the thickness of the pressure relief component at the connecting notch is T₂, satisfying: T₂ ≥ 0.04 mm. Setting the thickness of the pressure relief component at the pressure relief notch within a reasonable range can ensure that, when the battery cell relieves pressure, the connecting notches crack later than the pressure relief notches, while a portion of the pressure relief component is more easily actuated along the connecting notch, shortening the time required to form an opening of a predetermined area and thereby enabling rapid pressure relief.

In some embodiments, the first region is provided with a reinforcing notch, and a thickness of the pressure relief component at the reinforcing notch is greater than a thickness of the pressure relief component at the pressure relief notch. When the battery cell relieves pressure, the pressure relief notches crack prior to the reinforcing notches, and the reinforcing notches can reduce the risk that the opened portion of the pressure relief component may wrinkle, thereby resulting in an excessively small opening area and insufficient gas discharge.

In some embodiments, the thickness of the pressure relief component at the reinforcing notch is T₃, satisfying: T₃ ≥ 0.04 mm. Setting the thickness of the pressure relief component at the pressure relief notch within a reasonable range can ensure that, when the battery cell relieves pressure, the reinforcing notches crack later than the pressure relief notches, while the strength of the pressure relief component at the reinforcing notch is higher than the strength of the pressure relief component at the pressure relief notch, reducing the risk that the opened portion of the pressure relief component may wrinkle, thereby resulting in an excessively small opening area and insufficient gas discharge.

In some embodiments, the pressure relief component has a first surface and a second surface oppositely disposed along its thickness direction, the first surface is provided with a groove recessed toward the second surface, the pressure relief notch is disposed on a bottom wall of the groove, and a plurality of pressure relief notches are arranged at intervals along a circumferential direction of a side wall of the groove. When the battery cell relieves pressure, the plurality of pressure relief notches arranged at intervals along the circumferential direction of the side wall of the groove enable the opening formed when the pressure relief component is activated to have a relatively large area, thereby making gas discharge smoother and more rapid.

In some embodiments, at least two pressure relief notches include a first pressure relief notch and a second pressure relief notch, both the first pressure relief notch and the second pressure relief notch are bent in a direction away from the center of the pressure relief component, the first pressure relief notch has a first end and a second end, the second pressure relief notch has a third end close to the first end and a fourth end close to the second end, the first end and the third end are arranged at intervals, and the second end and the fourth end are arranged at intervals. When the battery cell relieves pressure, both the first pressure relief notch and the second pressure relief notch are bent in a direction away from the center of the pressure relief component, which can reduce the risk that the pressure relief portion defined by the first pressure relief notch and the second pressure relief notch in the pressure relief component is blocked by other portions of the housing, thereby resulting in an excessively small opening area. The first pressure relief notch has a first end and a second end, the second pressure relief notch has a third end close to the first end and a fourth end close to the second end, the first end and the third end are arranged at intervals, and the second end and the fourth end are arranged at intervals. Such a design can reduce the risk that the pressure relief portion defined by the first pressure relief notch and the second pressure relief notch may overlap with other components in the battery after being opened, which may cause a short circuit of the battery, thereby improving the reliability of the battery.

In some embodiments, the pressure relief component is further provided with a first connecting notch, one end of the first connecting notch is connected to the first end, the other end of the first connecting notch is connected to the second end, the first connecting notch and the first pressure relief notch enclose a first pressure relief region, and a thickness of the pressure relief component at the first connecting notch is greater than a thickness of the pressure relief component at the first pressure relief notch. When the battery cell relieves pressure, the first pressure relief notch cracks prior to the first connecting notch, and the first pressure relief region may open along the first connecting notch, shortening the time required for the first pressure relief region to form an opening and thereby enabling rapid pressure relief.

In some embodiments, at least one first reinforcing notch is disposed within the first pressure relief region, the thickness of the pressure relief component at the first reinforcing notch is greater than the thickness of the pressure relief component at the first pressure relief notch, and the first reinforcing notch is connected to the first pressure relief notch and/or the first connecting notch. When the battery cell relieves pressure, the first pressure relief notch cracks prior to the first reinforcing notch, and the first reinforcing notch can reduce the risk that the portion of the pressure relief component located in the first pressure relief region may wrinkle after being opened, thereby resulting in an excessively small opening area in the first pressure relief region and insufficient gas discharge.

In some embodiments, two ends of the first reinforcing notch are connected to the first pressure relief notch and the first connecting notch, respectively. When the first pressure relief region opens along the first connecting notch, such a design can further reduce the risk that the portion of the pressure relief component in the first pressure relief region may wrinkle when being opened, thereby further reducing the risk of an excessively small opening area and insufficient gas discharge.

In some embodiments, the pressure relief component is further provided with a second connecting notch, one end of the second connecting notch is connected to the third end, the other end of the second connecting notch is connected to the fourth end, the second connecting notch and the second pressure relief notch enclose a second pressure relief region, and a thickness of the pressure relief component at the second connecting notch is greater than a thickness of the pressure relief component at the second pressure relief notch. When the battery cell relieves pressure, the second pressure relief notch cracks prior to the second connecting notch, and the second pressure relief region may open along the second connecting notch, shortening the time required for the second pressure relief region to form an opening and thereby enabling rapid pressure relief.

In some embodiments, at least one second reinforcing notch is disposed within the second pressure relief region, the thickness of the pressure relief component at the second reinforcing notch is greater than the thickness of the pressure relief component at the second pressure relief notch, and the second reinforcing notch is connected to the second pressure relief notch and/or the second connecting notch. When the battery cell relieves pressure, the second pressure relief notch cracks prior to the second reinforcing notch, and the second reinforcing notch can reduce the risk that the portion of the pressure relief component located in the second pressure relief region may wrinkle after being opened, thereby resulting in an excessively small opening area in the second pressure relief region and insufficient gas discharge.

In some embodiments, two ends of the second reinforcing notch are connected to the second pressure relief notch and the second connecting notch, respectively. When the second pressure relief region opens along the second connecting notch, such a design can further reduce the risk that the portion of the pressure relief component in the second pressure relief region may wrinkle when being opened, thereby further reducing the risk of an excessively small opening area and insufficient gas discharge.

In some embodiments, the first connecting notch and the second connecting notch at least partially overlap. Such a design allows the first connecting notch and the second connecting notch to share a partial region of the pressure relief component, providing additional space for the first pressure relief region and the second pressure relief region and enhancing the likelihood of forming a relatively large opening for gas to pass through.

In some embodiments, the first connecting notch and the second connecting notch are the same notch. Such a design further enhances the likelihood of forming a relatively large opening for gas to pass through.

In some embodiments, the first connecting notch includes a first main body segment, a first connecting segment, and a second connecting segment, where one end of the first main body segment is connected to the first end of the first pressure relief notch via the first connecting segment, and the other end of the first main body segment is connected to the second end of the first pressure relief notch via the second connecting segment; and the second connecting notch includes a second main body segment, a third connecting segment, and a fourth connecting segment, where one end of the second main body segment is connected to the third end of the second pressure relief notch via the third connecting segment, the other end of the second main body segment is connected to the fourth end of the second pressure relief notch via the fourth connecting segment, and the first main body segment overlaps with the second main body segment. Such a design remains a certain spacing between the first end and the third end as well as between the second end and the fourth end, reducing the risk that, due to an excessively small spacing between the first end and the third end as well as between the second end and the fourth end, the portions of the pressure relief component outside the first pressure relief region and the second pressure relief region basically opens synchronously with the first pressure relief region and the second pressure relief region, leading to overlap between this portion of the pressure relief component and other components in the battery, which may result in a short circuit of the battery.

In some embodiments, the first connecting notch and the second connecting notch are arranged at intervals. Such a design reduces the likelihood of detachment of the portions of the pressure relief component located in the first pressure relief region and the second pressure relief region from the battery cell when the first pressure relief region opens along the first connecting notch and the second connecting notch opens along the second connecting notch, reducing the risk of secondary damage to the interior of the battery.

In some embodiments, the first connecting notch and the second connecting notch are parallel to each other. Such a design reduces the risk that the portion of the pressure relief component located in the first pressure relief region and the portion located in the second pressure relief region may interfere with each other when being opened, leading to excessively small opening areas in the first pressure relief region and the second pressure relief region.

In some embodiments, the first pressure relief notch and the second pressure relief notch are symmetrically disposed with respect to a central axis of the pressure relief component in its length direction or a central axis of the pressure relief component in its width direction. Such a design ensures that the ease of cracking of the first pressure relief notch and the second pressure relief notch is substantially consistent, enabling the first pressure relief notch and the second pressure relief notch to crack in a timely manner and improving pressure relief efficiency.

In some embodiments, the first pressure relief notch includes a first straight line segment, a first arc line segment, and a second arc line segment, with two ends of the first straight line segment connected to the first arc line segment and the second arc line segment, respectively. The second pressure relief notch includes a second straight line segment, a third arc line segment, and a fourth arc line segment, with two ends of the second straight line segment connected to the third arc line segment and the fourth arc line segment, respectively. The provision of the first arc line segment, the second arc line segment, the third arc line segment, and the fourth arc line segment facilitates enclosing a relatively large area. Consequently, the opening formed when the battery cell relieves pressure has a relatively large area, thereby enabling smooth pressure relief.

In some embodiments, the pressure relief component has a first surface and a second surface oppositely disposed along its thickness direction, the first surface is provided with a groove recessed toward the second surface, the first pressure relief notch and the second pressure relief notch are disposed on a bottom wall of the groove, and both the first pressure relief notch and the second pressure relief notch extend along a circumferential direction of a side wall of the groove. The first pressure relief notch and the second pressure relief notch arranged at intervals along the circumferential direction of the side wall of the groove enable the opening formed when the pressure relief component is activated to have a relatively large area, thereby making gas discharge smoother and more rapid.

According to a second aspect, this application provides a battery cell including the pressure relief component in the above embodiments, where the pressure relief component is configured to relieve internal pressure of the battery cell.

In some embodiments, the battery cell further includes a housing, where the housing has a wall portion; and the pressure relief component is the wall portion. The housing has a wall portion, and the pressure relief component is the wall portion of the housing, meaning that the pressure relief component is one wall of the housing. This allows pressure relief notches to be directly formed on the housing, thereby reducing processing steps and costs.

In some embodiments, the battery cell further includes a housing, where the housing has a wall portion, and the wall portion is provided with a pressure relief hole. The pressure relief component is mounted on the wall portion and covers the pressure relief hole. The pressure relief component and the housing are separately provided, and the pressure relief component is an independent component mounted on one wall of the housing. This structure, on one hand, facilitates reducing assembly difficulty between the pressure relief component and the housing, thereby the improving production efficiency of the battery cell. On the other hand, pressure relief notches can be pre-processed on the pressure relief component before being assembled with the pressure relief hole, thus reducing the risk of excessive deformation of the housing caused by directly processing notches on the housing.

In some embodiments, the housing includes a case body and an end cover, where an accommodating cavity with an opening is formed inside the case body, and the accommodating cavity is configured to accommodate an electrode assembly. The end cover closes the opening. The end cover is the wall portion. By configuring the wall portion of the housing as the end cover of the housing for closing the opening of the case body, a battery cell with this structure facilitates the mounting of the pressure relief portion on the end cover, thereby effectively reducing the processing difficulty of the battery cell and improving the production efficiency of the battery cell.

In some embodiments, the housing includes a case body and an end cover, where an accommodating cavity with an opening is formed inside the housing, and the accommodating cavity is configured to accommodate an electrode assembly. The end cover closes the opening. The case body includes the wall portion. By configuring the wall portion of the housing as one wall of the case body, a battery cell with this structure can reduce the impact of stress induced when the end cover and the case body are connected to each other on the pressure relief notches, thereby reducing abnormal cracking of the pressure relief notches and improving the reliability of the battery cell.

According to a third aspect, this application provides a battery including the battery cell in the above embodiments.

According to a fourth aspect, this application provides an electric device including the battery cell in the above embodiments, where the battery cell is configured to provide electrical energy, or it includes the battery in the above embodiments, where the battery is configured to provide electrical energy.

The above description is merely an overview of the technical solution of this application. To gain clearer understanding of the technical means of this application and thereby enable implementation in accordance with the content of the specification, and to render the other objectives, features, and advantages of this application more readily apparent and comprehensible, specific embodiments of this application are specifically set forth below.

### BRIEF DESCRIPTION OF THE DRAWINGS

By reading the detailed description of the preferred embodiments below, various other advantages and benefits will become clear to those of ordinary skill in the art. The accompanying drawings are only for illustrating the preferred embodiments and are not considered as limiting this application. Moreover, throughout the accompanying drawings, the same reference signs indicate the same components. In the accompanying drawings:
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of a pressure relief component according to some embodiments of this application;
FIG. 5 is a schematic structural diagram of a pressure relief component according to further some embodiments of this application;
FIG. 6 is a schematic structural diagram of a pressure relief component according to still further some embodiments of this application;
FIG. 7 is a schematic structural diagram of a pressure relief component according to still further some embodiments of this application, showing connecting notches;
FIG. 8 is a schematic structural diagram of a pressure relief component according to some other embodiments of this application;
FIG. 9 is a cross-sectional view at A-A in FIG. 8 of this application;
FIG. 10 is a schematic structural diagram of a pressure relief component according to some other embodiments of this application;
FIG. 11 is a cross-sectional view at B-B in FIG. 10 of this application;
FIG. 12 is an axonometric view of a pressure relief component according to some embodiments of this application;
FIG. 13 is an axonometric view of a pressure relief component according to further some embodiments of this application;
FIG. 14 is a schematic structural diagram of a pressure relief component according to some embodiments of this application, where a first connecting notch and a second connecting notch at least partially overlap;
FIG. 15 is a cross-sectional view at C-C in FIG. 14 of this application;
FIG. 16 is a schematic structural diagram of a pressure relief component according to some embodiments of this application, where a first connecting notch and a second connecting notch are arranged at intervals;
FIG. 17 is a schematic structural diagram of a pressure relief component according to some embodiments of this application, where a first connecting notch and a second connecting notch are the same notch;
FIG. 18 is a partial enlarged view at D in FIG. 17 of this application;
FIG. 19 is a partial enlarged view at E in FIG. 14 of this application; and
FIG. 20 is a schematic structural diagram of a pressure relief component according to some embodiments of this application, showing contours of a first pressure relief notch and a second pressure relief notch.

The reference signs in the detailed description are as follows:
1000: vehicle; 200: controller; 300: motor; 100: battery; 11: box body; 111: first portion; 112: second portion; 12: battery cell; 121: housing; 1211: end cover; 1212: case body; 122: electrode assembly; 10: pressure relief component; 1001: first surface; 1002: second surface; 101: pressure relief notch; 1011: first pressure relief notch; 10111: first end; 10112: second end; 10113: first arc line segment; 10114: first straight line segment; 10115: second arc line segment; 1012: second pressure relief notch; 10121: third end; 10122: fourth end; 10123: third arc line segment; 10124: second straight line segment; 10125: fourth arc line segment; 102: first region; 103: center of pressure relief component; 104: connecting notch; 1041: first connecting notch; 10411: first main body segment; 10412: first connecting segment; 10413: second connecting segment; 1042: second connecting notch; 10421: second main body segment; 10422: third connecting segment; 10423: fourth connecting segment; 105: reinforcing notch; 1051: first reinforcing notch; 1052: second reinforcing notch; 106: groove; a: central axis of pressure relief component in its length direction; b: central axis of pressure relief component in its width direction.

### DETAILED DESCRIPTION

Embodiments of the technical solution of this application will be described in detail below with reference to the accompanying drawings. The following embodiments are only for more clearly illustrating the technical solution of this application and therefore are only examples and cannot be used to limit the protection scope of this application.

Unless otherwise defined, all technical and scientific terms used herein have the same meaning as commonly understood by those skilled in the technical field to which this application belongs; the terms used herein are only for describing specific embodiments and are not intended to limit this application; the terms "including" and "having" in the specification and claims of this application and the above description of the accompanying drawings, as well as any variations thereof, are intended to cover non-exclusive inclusion.

In the description of the embodiments of this application, the technical terms "first," "second," and the like are only used to distinguish different objects and cannot be understood as indicating or implying relative importance or implicitly indicating the number, specific order, or primary-secondary relationship of the indicated technical features. In the description of the embodiments of this application, the meaning of "plurality" is two or more, unless otherwise explicitly and specifically limited.

Reference herein to "embodiment" means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "plurality" refers to more than two (including two), similarly, "a plurality of groups" refers to more than two groups (including two groups), and "a plurality of pieces" refers to more than two pieces (including two pieces).

In the description of the embodiments of this application, the orientation or positional relationships indicated by the technical terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like are based on the orientation or positional relationships shown in the accompanying drawings and are merely for convenience in describing the embodiments of this application and simplifying the description, and do not indicate or imply that the indicated device or element must have a specific orientation, be constructed and operated in a specific orientation, and therefore cannot be understood as limiting the embodiments of this application.

In the description of the embodiments of this application, unless otherwise explicitly specified and limited, the technical terms "mounting," "joining," "connection," "fixation," and the like should be understood in a broad sense, for example, it can be a fixed connection, a detachable connection, or integrated; it can be a mechanical connection or an electrical connection; it can be a direct connection or an indirect connection through an intermediate medium, it can be internal communication of two elements or interaction between two elements. For those of ordinary skill in the art, the specific meanings of the above terms in the embodiments of this application can be understood according to specific situations.

In this application, a battery cell may include but is not limited to a lithium-ion secondary battery, a lithium-ion primary battery, a lithium-sulfur battery, a sodium-lithium-ion battery, a sodium-ion battery, or a magnesium-ion battery. The shape of the battery cell may include but is not limited to a cylinder, a flat body, a rectangular body, or other shapes. The battery cell according to packaging method may include but is not limited to a cylindrical battery cell, a prismatic battery cell, and a pouch battery cell.

In some high-power applications such as electric vehicles, battery applications include three levels: battery cell, battery module, and battery pack. A battery module is formed by electrically connecting a specific number of battery cells and placing them in a frame to protect the battery cells from external impact, heat, vibration, and the like. A battery pack refers to the final configuration of the battery system installed in an electric vehicle. The battery mentioned in the embodiments of this application refers to a single physical module including one or more battery cells to provide higher voltage and capacity. Such a battery generally includes a box body for encapsulating one or more battery cells. The box body can reduce the risk of liquids or other foreign matter affecting the charging or discharging of the battery cells.

The following will mainly focus on prismatic battery cells. It should be understood that the embodiments described below are also applicable in some aspects to cylindrical battery cells or pouch battery cells.

In a typical battery cell structure, the battery cell includes a housing component, an electrode assembly, and an electrolyte. The housing component may be an end cover or a case body, and the end cover closes an opening of the case body to define an accommodating space for accommodating the electrode assembly.

The electrode assembly is accommodated in the accommodating space and includes a positive electrode sheet, a negative electrode sheet, and a separator. The battery cell mainly operates by the movement of metal ions between the positive electrode sheet and the negative electrode sheet. The positive electrode sheet includes a positive electrode current collector and a positive electrode active material layer, the positive electrode active material layer is coated on a surface of the positive electrode current collector, the positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, the material of the positive electrode current collector may be aluminum, and the positive electrode active material may be lithium cobaltate, lithium iron phosphate, ternary lithium, lithium manganate, or the like. The negative electrode sheet includes a negative electrode current collector and a negative electrode active material layer, the negative electrode active material layer is coated on a surface of the negative electrode current collector, the negative electrode current collector not coated with the negative electrode active material layer protrudes from the negative electrode current collector coated with the negative electrode active material layer, and the negative electrode current collector not coated with the negative electrode active material layer serves as a negative electrode tab. The material of the negative electrode current collector may be copper, and the negative electrode active material may be carbon, silicon, or the like. To pass a large current without fusing, the number of positive electrode tabs is plurality and stacked together, and the number of negative electrode tabs is plurality and stacked together. In addition, the forming method of the electrode assembly may include but is not limited to winding or stacking.

The tabs are generally electrically connected to a conductive member to lead out electrical energy of the electrode assembly; in some cases, the conductive member is an adapter sheet connecting the tab and an electrode terminal. In some other cases, the conductive member is the electrode terminal.

The electrode terminals generally include a positive electrode terminal and a negative electrode terminal. For prismatic battery cells, the electrode terminals are generally disposed on the end cover portion. In some other cases, the electrode terminals may also be disposed on the case body portion. A plurality of battery cells are connected in series and/or parallel via the electrode terminals for various applications.

The development of battery technology must consider a plurality of design factors simultaneously, such as energy density, cycle life, discharge capacity, charge-discharge rate, and other performance parameters, and additionally, the reliability of the battery must be considered.

For battery cells, there are generally at least three protection measures. Specifically, the protection measures at least include a switching element, selection of an appropriate separator material, and a pressure relief component.

The pressure relief component refers to an element or part that is actuated to relieve internal pressure or temperature when the internal pressure or temperature of the battery cell or other conditions reach a predetermined threshold. The threshold varies according to different design requirements. The threshold may depend on the material of one or more of the positive electrode sheet, negative electrode sheet, electrolyte, and separator in the battery cell. The pressure relief component may take the form of an explosion-proof valve, a gas valve, a pressure relief valve, a safety valve, or the like, and may specifically adopt a pressure-sensitive or temperature-sensitive element or structure. To be specific, when the internal pressure or temperature of the battery cell reaches a predetermined threshold, the pressure relief component performs an action or a weak structure provided in the pressure relief component is destroyed, thereby forming an opening or channel for relieving internal pressure or temperature. A weak structure generally has a melting point and/or thickness lower than other regions of the pressure relief component. For example, the weak structure may be a notch groove formed on the surface of the pressure relief component, and the like.

The "actuation" mentioned in this application means that the pressure relief component produces an action or is activated to a certain state, thereby relieving the internal pressure and temperature of the battery cell. The action produced by the pressure relief component may include but is not limited to: rupture, breakage, tearing, or opening of at least a portion of the pressure relief component. Actuation of the pressure relief component may also be referred to as opening of the pressure relief component. When the pressure relief component is actuated, high-temperature and high-pressure substances inside the battery cell are discharged outward as exhausts from the actuated portion. In this way, the battery cell can relieve pressure and dissipate heat under controllable pressure or temperature, thereby avoiding potentially more serious accidents.

The exhausts from the battery cell mentioned in this application include but are not limited to: electrolyte, dissolved or split positive and negative electrode sheets, fragments of the separator, high-temperature and high-pressure gas generated by reaction, and flame.

The pressure relief component is generally disposed on the end cover. When the battery cell undergoes thermal runaway, high-temperature and high-pressure exhausts are discharged toward a direction where the pressure relief component is disposed on the battery cell, and more specifically along a direction toward the region where the pressure relief component is actuated, and the power and destructive force of such exhausts may be very large, even sufficient to break through one or more structures in that direction. In embodiments where the weak structure is a notch groove, when the battery cell undergoes thermal runaway, the notch groove ruptures to form an opening for exhausts to pass through smoothly.

In some cases, to enable a larger opening area formed when the pressure relief component is actuated during thermal runaway of the battery cell, the notch groove is generally disposed at the edge of the pressure relief component, and the notch groove extends along the circumferential direction of the pressure relief component to enclose a larger area and form a larger opening for exhausts to pass through. Inside the battery, to increase the energy density of the battery, the space between the side where the battery cell is provided with the pressure relief component and other components in the battery (such as busbars in busbar assemblies, high-voltage interfaces in the battery, and connecting pieces) is generally designed to be as small as possible. Such notch grooves are generally shallow on one side and deep on three sides; when the pressure relief component is actuated, the pressure relief component opens along the shallow side of the notch, and at this time, the size of the opened portion of the pressure relief component is basically similar to the overall size of the pressure relief component, easily overlapping with other components in the battery, leading to short circuit of the battery. The reliability of the battery is poor.

In other cases, the pressure relief component is divided into a plurality of pressure relief portions by the notch groove, and the plurality of pressure relief portions flip from the center of the pressure relief component toward an edge of the pressure relief component to form an opening, but generally there is a certain height difference at the position where the battery cell is provided with the pressure relief component, and the central portion of the pressure relief component is generally larger in size; and during the process of the plurality of pressure relief portions flipping from the center toward the edge of the pressure relief component, a longer edge of the pressure relief portion located in the central portion of the pressure relief component is in a flipping state, with a higher risk of interference with remaining portions of the pressure relief component other than the pressure relief portions, such as hole walls and annular bosses. This thereby leads to a relatively small opening area after the pressure relief component is actuated, or greater difficulty in fully opening the pressure relief component, or greater difficulty in achieving full opening to form a predetermined opening area. If any of the above scenarios occur, the pressure relief capability of the pressure relief component is reduced, thereby impairing the reliability of the battery.

In view of this, this application provides a pressure relief component used for a battery cell, where the pressure relief component is provided with at least two pressure relief notches, each pressure relief notch and connecting lines at two ends of the pressure relief notch enclose a first region, a plurality of first regions are arranged at intervals, and a connecting line of at least one first region is located on a side of the first region adjacent to the center of the pressure relief component. When the battery cell relieves pressure, the cracking of the pressure relief notches causes the pressure relief component to form an opening for gas to pass through smoothly. The pressure relief component is provided with at least two pressure relief notches, each pressure relief notch and connecting lines at two ends of the pressure relief notch enclose a first region, and a plurality of first regions are arranged at intervals. Such a design can enable the pressure relief component, when being opened, to form an opening with a larger area while reducing the risk of partial overlap of the pressure relief component with other components in the battery leading to short circuit of the battery, improving the reliability of the battery. The connecting line of at least one first region is located on the side of the first region adjacent to the center of the pressure relief component, which can reduce the risk that the portion of the pressure relief component located within the first region is blocked by other portions of the housing of the battery cell when the pressure relief component is activated, resulting in an excessively small opening area.

The technical solution described in the embodiments of this application is applicable to battery cells, batteries, and electric devices powered by batteries.

Electric devices include but are not limited to: electric scooters, electric vehicles, ships, and spacecraft, for example, spacecraft include airplanes, rockets, space shuttles, and spaceships.

For convenience of explanation, the following embodiments take an electric device according to one embodiment of this application as a vehicle 1000 as an example.

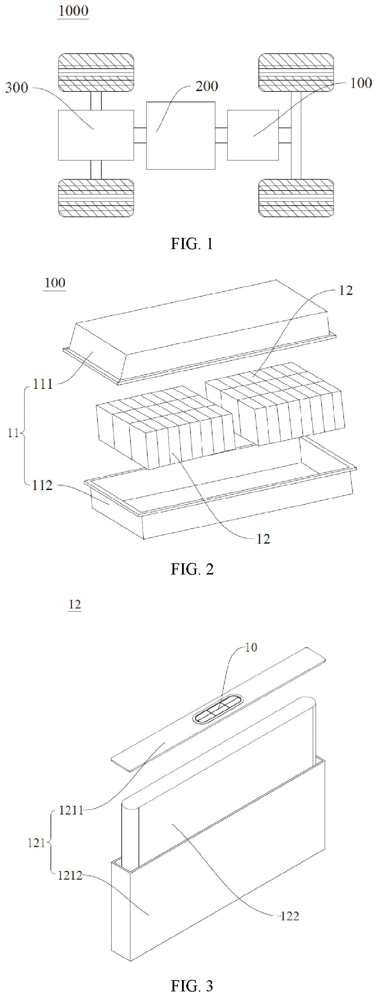

For example, FIG. 1 is a schematic structural diagram of a vehicle 1000 according to some embodiments of this application. The vehicle 1000 may be a fuel-powered vehicle, a gas-powered vehicle, or a new energy vehicle, and the new energy vehicle may be a pure electric vehicle, a hybrid electric vehicle, or an extended-range electric vehicle. The interior of the vehicle 1000 may be provided with a motor 300, a controller 200, and a battery 100, and the controller 200 is configured to control the battery 100 to supply power to the motor 300. For example, the battery 100 may be disposed at the bottom, front, or rear of the vehicle 1000. The battery 100 may be used for powering the vehicle 1000, for example, the battery 100 may serve as an operating power source for the vehicle 1000, for circuit systems of the vehicle 1000, for example, for starting, navigation, and operating power requirements of the vehicle 1000. In another embodiment of this application, the battery 100 may not only serve as an operating power source for the vehicle 1000 but also as a driving power source for the vehicle 1000, replacing or partially replacing fuel or natural gas to provide a driving force for the vehicle 1000.

To meet different power usage requirements, the battery 100 may include a plurality of battery cells 12, where the plurality of battery cells 12 may be connected in series or parallel or a mixed connection, where the mixed connection refers to a combination of series and parallel connections. The battery 100 may also be referred to as a battery pack. Optionally, the plurality of battery cells 12 may first be connected in series or parallel or mixed connection to form a battery module, and then a plurality of battery modules may be connected in series or parallel or mixed connection to form the battery 100. That is, the plurality of battery cells 12 may directly form the battery 100, or first form battery modules, and then the battery modules form the battery 100.

For example, referring to FIG. 2, FIG. 2 is an exploded view of a battery 100 according to some embodiments of this application. The battery 100 may include a plurality of battery cells 12. The battery 100 may further include a box body 11, the interior of the box body 11 is a hollow structure, and the plurality of battery cells 12 are accommodated in the box body 11. As shown in FIG. 2, the box body 11 may be divided into a first portion 111 and a second portion 112, and the first portion 111 and the second portion 112 are fastened together. The shapes of the first portion 111 and the second portion 112 may be determined based on the shape of the combination of the plurality of battery cells 12, and the first portion 111 and the second portion 112 may each have an opening. For example, the first portion 111 and the second portion 112 may each be a hollow cuboid with only one surface as an opening surface, the opening of the first portion 111 and the opening of the second portion 112 are oppositely disposed, and the first portion 111 and the second portion 112 are fastened to each other to form a box body 11 with a closed chamber. The plurality of battery cells 12 are connected in parallel or series or mixed connection and then placed in the box body 11 formed after the first portion 111 and the second portion 112 are fastened.

Optionally, the battery 100 may further include other structures, which are not elaborated on herein. For example, the battery may further include a busbar assembly configured to achieve electrical connection between the plurality of battery cells 12, such as parallel or series or mixed connection. Specifically, the busbar assembly may achieve electrical connection between the battery cells 12 by connecting electrode terminals of the battery cells 12. Further, the busbar assembly may be fixed to the electrode terminals of the battery cells 12 by welding. The busbar assembly may include busbars, and the electrode terminals of the battery cells 12 are welded to the busbars, and electrical energy of the plurality of battery cells 12 may be further drawn out through a conductive mechanism passing through the box body 11.

According to different power requirements, the number of battery cells 12 may be set to any value. The plurality of battery cells 12 may be connected in series, parallel, or mixed connection to achieve larger capacity or power. Since each battery 100 may include a large number of battery cells 12, the battery cells 12 may be grouped for ease of installation, with each group of battery cells 12 forming a battery module. The number of battery cells 12 included in the battery module is not limited and may be set according to requirements. The battery 100 may include a plurality of battery modules, which may be connected in series, parallel, or mixed connection.

Referring to FIG. 3, FIG. 3 is an exploded view of a battery cell 12 according to some embodiments of this application. The battery cell 12 includes one or more electrode assemblies 122 and a housing 121. The housing 121 may include a case body 1212, where a plurality of wall portions of the case body 1212, that is, the plurality of wall portions of the housing 121, enclose a cavity that may be used to accommodate the electrode assembly 122. The case body 1212 is determined based on the shape after combination of one or more electrode assemblies 122, for example, the case body 1212 may be a hollow cuboid, cube, or regular polyhedron, and one surface of the case body 1212 has an opening so that one or more electrode assemblies 122 can be placed in the case body 1212. The case body 1212 is filled with electrolyte, such as electrolytic solution.

The battery cell 12 may further include two electrode terminals, where the two electrode terminals may be disposed on an end cover 1211. The end cover 1211 is generally flat-shaped, the two electrode terminals are fixed on the flat surface of the end cover 1211, and the two electrode terminals are a positive electrode terminal and a negative electrode terminal. Each electrode terminal is correspondingly provided with an adapter sheet, which is located between the end cover 1211 and the electrode assembly 122 and configured to achieve electrical connection between the electrode assembly 122 and the electrode terminal. In this battery cell 12, according to actual usage requirements, the electrode assembly 122 may be set as a single one or plurality, and a plurality of independent electrode assemblies 122 are provided in the battery cell 12. The battery cell 12 may further include a pressure relief component 10, where the pressure relief component 10 may be a wall portion of the case body 1212 or a portion thereof, or may be the end cover 1211 itself or a portion thereof.

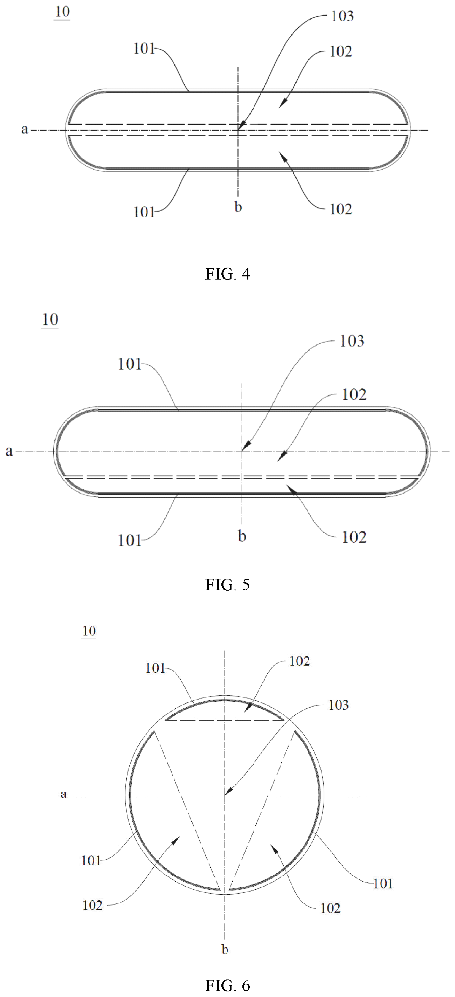

According to some embodiments of this application, referring to FIGs. 4 to 6, this application provides a pressure relief component 10 used for a battery cell 12, where the pressure relief component 10 is provided with at least two pressure relief notches 101, each pressure relief notch 101 and connecting lines at two ends of the pressure relief notch 101 enclose a first region 102, a plurality of first regions 102 are arranged at intervals, and a connecting line of at least one first region 102 is located on a side of the first region 102 close to a center 103 of the pressure relief component.

Actuation of the pressure relief component 10 refers to the scenario where the internal pressure of the battery cell 12 reaches a preset pressure or temperature or other predetermined thresholds requiring relief of internal pressure or dissipation of temperature.

The shape of the pressure relief component 10 may include but is not limited to circular, elliptical, polygonal, or kidney-shaped configurations. The shape of the pressure relief component 10 may be a shape with certain symmetry or an asymmetric shape.

The center 103 of the pressure relief component may be the geometric center of the pressure relief component 10, and the geometric center is the most central position of an object with certain symmetry, such as the center of a circle, the center of a sphere, the intersection of two pairs of diagonals of a parallelogram. It may alternatively be the center of gravity of the pressure relief component 10, or the intersection point formed in the thickness direction of the pressure relief component 10 between a line passing through the center of gravity of the pressure relief component 10 and the thickness direction of the pressure relief component 10. The center of gravity may be determined by methods such as hanging method, support method, needle-point method, plumb line method.

The pressure relief notch 101 may refer to a portion of the pressure relief component 10 with thickness and/or melting point lower than those of other regions of the pressure relief component 10 except the pressure relief notch 101, such as a notch groove or pressure relief groove, that is, a groove 106 formed on the surface of the pressure relief component 10, equivalently thinning the thickness of the pressure relief component 10 at the position where the pressure relief notch 101 is formed.

The pressure relief notch 101 may be formed by machining, etching, stamping, and the like.

The connecting lines at two ends of the pressure relief notch 101 are virtual lines, not physical grooves or other entities, and may be understood as reference lines. Each pressure relief notch 101 and connecting lines at two ends of the pressure relief notch 101 enclose a first region 102, meaning that the shape of the pressure relief notch 101 is a non-linear notch.

Under the premise that the opening areas formed by the pressure relief component 10 are substantially the same, compared to a battery cell 12 where the pressure relief component 10 includes a notch groove that is shallow on one side and deep on three sides, the pressure relief component 10 is provided with at least two pressure relief notches 101, each pressure relief notch 101 and the connecting lines at two ends of the pressure relief notch 101 enclose a first region 102, and a plurality of first regions 102 are arranged at intervals, meaning that when the pressure relief component 10 is actuated, the height (or valve opening height) by which the opened portion of the pressure relief component 10, such as the flipped portion, protrudes beyond the surface of the pressure relief component 10 is smaller. This reduces the risk of the pressure relief component 10 coming into contact with a busbar, high-voltage interface, or connecting pieces. Taking the pressure relief component 10 as a strip-shaped sheet as an example, the above valve opening height is smaller than the maximum length or maximum width of the pressure relief component 10.

When the pressure relief component 10 is actuated, a portion of the pressure relief component 10 may open with the pressure relief notch 101 as a boundary, and the opened portion may be referred to as a pressure relief portion. The way the pressure relief portion opens may be that an edge adjacent to the pressure relief notch 101 warps and protrudes beyond the surface where the pressure relief notch 101 is formed on the pressure relief component 10, or that the pressure relief portion flips with the end of the pressure relief notch 101 as a base point.

The shape of the pressure relief notch 101 may be arc-shaped, polyline-shaped, and the like. The pressure relief notch 101 may include a plurality of segments of notches, for example, may include at least one arc line segment and at least one straight line segment.

At least two pressure relief notches 101 may be arranged at intervals along a specific direction; taking the pressure relief component 10 as a strip-shaped sheet as an example, a plurality of pressure relief notches 101 may be distributed on two sides of the central axis in its length direction, the plurality of pressure relief notches 101 are all arranged at intervals along its length direction, and the pressure relief notches 101 on the same side of the central axis in its length direction are all bent in a direction away from its center point. In other embodiments, the plurality of pressure relief notches 101 on two sides of the central axis in its length direction are in one-to-one correspondence with and are mirror-symmetrical with respect to the central axis in its length direction.

A connecting line of at least one first region 102 is located on a side of the first region 102 adjacent to the center 103 of the pressure relief component, meaning that when the pressure relief component 10 is actuated, the pressure relief portion "opens from the edge toward the center"; taking the case where the pressure relief portion flips and protrudes beyond the outer surface of the pressure relief component 10 as an example, the pressure relief portion flips from the edge of the pressure relief component 10 toward the center, for example, referring to FIG. 4, when the pressure relief component 10 is actuated, the upper and lower two pressure relief notches 101 crack and flip with the line connecting their two endpoints as a reference baseline, forming a "V"-shaped state after flipping.

Referring to FIGs. 4-6, in embodiments where the pressure relief component 10 includes a plurality of first regions 102, the areas of the first regions 102 may be the same or different.

In some embodiments, the pressure relief component 10 is disposed on a wall portion of the battery cell 12 or is the wall portion of the battery cell 12, generally having certain conductivity, and its material may include aluminum, steel, or the like.

In some cases, the pressure relief notch 101 of the pressure relief component 10 may include four sides, and the pressure relief notch 101 extends along the circumferential direction of the pressure relief component 10, with one notch segment on one side being shallow and the other three on the remaining sides being deep. When the pressure relief component 10 is actuated, the deep notches crack first, and under the impact of high-temperature gas, it flips with the shallow notch segment as an axis, and after flipping, the height by which the pressure relief portion protrudes beyond the surface of the pressure relief component 10 is substantially consistent with the maximum length or maximum width of the pressure relief component 10, with higher risk of contact with the busbar. In other cases, the pressure relief component 10 is disposed on a wall portion of the battery cell 12, and the central portion of the pressure relief component 10 is generally larger in size. The pressure relief component 10 is disposed in a pressure relief hole formed on the wall portion of the battery cell 12 and covers the pressure relief hole; if the pressure relief portion flips from the center toward the edge, the longer edge of the pressure relief portion is in a flipping state and easily interferes with and gets stuck by the hole wall, making it more difficult to form an opening of a preset area. When the pressure relief portion comes into contact with the hole wall, wrinkling may occur, and the wrinkled pressure relief portion may also block part of the preset opening, making the pressure relief area smaller than the preset area, thereby resulting in insufficient gas discharge.

In the technical solution of the embodiments of this application, when the battery cell 12 relieves pressure, the cracking of the pressure relief notches 101 causes the pressure relief component 10 to form an opening for gas to pass through smoothly. The pressure relief component 10 is provided with at least two pressure relief notches 101, each pressure relief notch 101 and the connecting lines at two ends of the pressure relief notch 101 enclose a first region 102, and a plurality of first regions 102 are arranged at intervals. Such a design can enable the pressure relief component 10, when being opened, to form an opening with a larger area while reducing the risk of partial overlap of the pressure relief component 10 with other components in the battery 100 leading to short circuit of the battery 100, thereby improving the reliability of the battery 100. The connecting line of at least one first region 102 is located on the side of the first region 102 adjacent to the center 103 of the pressure relief component, which can reduce the risk that the portion of the pressure relief component 10 located within the first region 102 is blocked by other portions of the housing 121 of the battery cell 12 when the pressure relief component 10 is activated, resulting in an excessively small opening area.

According to some embodiments of this application, referring to FIGs. 4 to 6, the plurality of first regions 102 are arranged at intervals around the center 103 of the pressure relief component, and each pressure relief notch 101 is bent in a direction away from the center of the pressure relief component 10.

Bending can be understood as curving, arching, protruding, and the like.

The plurality of first regions 102 arranged at intervals around the center 103 of the pressure relief component include the plurality of first regions 102 arranged at intervals along the circumferential direction of the pressure relief component 10. The angles spaced between adjacent two first regions 102 may be the same or different. In FIGs. 4 and 5, the two first regions 102 can be understood as spaced 180 degrees around the center 103 of the pressure relief component, and in FIG. 6, the three first regions 102 can be understood as spaced 120 degrees around the center 103 of the pressure relief component.

The plurality of first regions 102 are arranged at intervals around the center 103 of the pressure relief component, and each pressure relief notch 101 is bent in a direction away from the center of the pressure relief component 10, meaning that the plurality of pressure relief portions of the pressure relief component 10 all open from the edge toward the center, and even if the pressure relief portions are in a flipping state, the risk of contact or abutment between adjacent pressure relief portions during the flipping process is low.

The plurality of first regions 102 are arranged at intervals around the center 103 of the pressure relief component, and each pressure relief notch 101 is bent in a direction away from the center of the pressure relief component 10. Such a design can reduce the risk that the portion of the pressure relief component 10 located within the first region 102 is blocked by the portion within an adjacent first region 102 when the pressure relief component 10 is activated, resulting in an excessively small opening area.

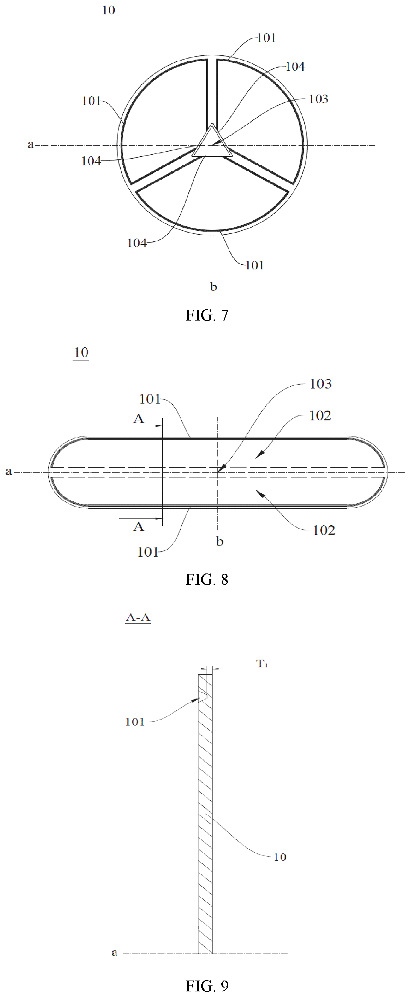

According to some embodiments of this application, referring to FIGs. 8 and 9, the thickness of the pressure relief component 10 at the pressure relief notch 101 is T₁, satisfying: T₁ ≥ 0.03 mm.

The thickness of the pressure relief component 10 at the pressure relief notch 101 may be any value greater than or equal to 0.03 mm and less than the thickness of the pressure relief component 10 itself, for example, 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, or the like. When the pressure relief component 10 is a non-uniform thickness structural member, its thickness refers to its average thickness.

Taking providing a notch groove on the surface of the pressure relief component 10 as an example, the thickness of the pressure relief component 10 at the pressure relief notch 101 refers to the remaining thickness after providing the notch groove at the position where the notch groove is formed on the pressure relief component 10, also referred to as residual thickness.

Setting the thickness of the pressure relief component 10 at the pressure relief notch 101 within a reasonable range enables the pressure relief notch 101 to crack more likely when the battery cell 12 relieves pressure, thereby enabling smooth pressure relief of the battery cell 12.

According to some embodiments of this application, referring to FIGs. 7, 10, and 11, the pressure relief component 10 is provided with at least two connecting notches 104, the connecting notches 104 are in one-to-one correspondence with the pressure relief notches 101, two ends of each pressure relief notch 101 are connected by the connecting notch 104, and a thickness of the pressure relief component 10 at the connecting notch 104 is greater than a thickness of the pressure relief component 10 at the pressure relief notch 101.

The thickness of the pressure relief component 10 at the connecting notch 104 being greater than the thickness of the pressure relief component 10 at the pressure relief notch 101 means that when the pressure relief component 10 is actuated, the pressure relief notches 101 crack prior to the connecting notch 104; since the position where the pressure relief component 10 is provided with the connecting notch 104 is also relatively weaker, taking the connecting notch 104 as a notch groove as an example, the space of the notch groove provides space for flipping of a portion of the pressure relief component 10; after the pressure relief notch 101 cracks, the impact force generated by thermal runaway of the battery cell 12 drives a portion of the pressure relief component 10 to flip with the connecting notch 104 as an axis. It can be understood that the connecting notch 104 is to some extent similar to a pre-formed crease on paper during paper folding.

Taking the embodiment where the pressure relief notch 101 and the connecting notch 104 are integrally formed by stamping as an example, since stamping is required to form the pressure relief notch 101, if the pressure relief component 10 does not have the connecting notch 104, stamping to form the recessed pressure relief notch 101 would squeeze part of the material toward the center 103 of the pressure relief component, with higher risk of bulging at the center 103 of the pressure relief component. Simultaneously processing the pressure relief notch 101 and the connecting notch 104, while stamping to form the recessed pressure relief notch 101, stamping to form the recessed connecting notch 104 can balance internal stress of the pressure relief component 10, making the material distribution of the pressure relief component 10 more uniform after forming the pressure relief notch 101 and the connecting notch 104, reducing the risk of partial bulging of the pressure relief component 10.

In some embodiments, referring to FIG. 7, the pressure relief component 10 includes three pressure relief notches 101, the three pressure relief notches 101 are arranged at intervals along the edge of the pressure relief component 10, the pressure relief component 10 is further provided with three connecting notches 104, the connecting notches 104 are in one-to-one correspondence with the pressure relief notches 101, two ends of each pressure relief notch 101 are connected by its corresponding connecting notch 104; when the battery cell 12 relieves pressure, the pressure relief notches 101 crack prior to the connecting notch 104; in some cases, the three pressure relief notches 101 flip with their corresponding connecting notches 104 as axes; the pressure relief notch 101 may include three segments, two straight line segments and one arc line segment, the arc line segment protrudes away from the center 103 of the pressure relief component. The two straight line segments are respectively located at both ends of the arc line segment, one end of the straight line segment is connected to the arc line segment, and the other end of the straight line segment is connected to the connecting notch 104. Compared to the embodiment shown in FIG. 6, the embodiment shown in FIG. 7 has a larger opening area formed when the pressure relief component 10 is actuated, facilitating improved exhaust efficiency. Optionally, the shape of the pressure relief component 10 is circular, and the center 103 of the pressure relief component is the center of the circle of the pressure relief component 10.

When the battery cell 12 relieves pressure, the pressure relief notches 101 crack prior to the connecting notch 104, a portion of the pressure relief component 10 may open along the connecting notch 104 or flip with the connecting notch 104 as an axis, shortening the time required to form an opening of a predetermined area and thereby enabling rapid pressure relief.

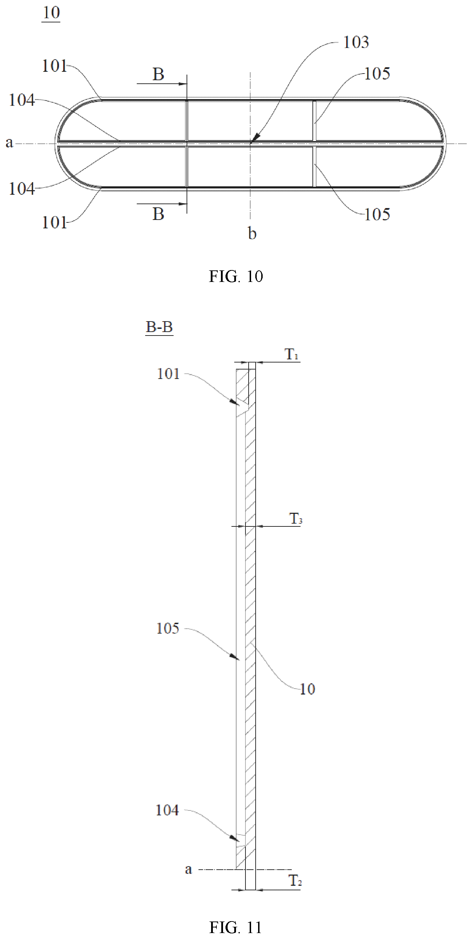

According to some embodiments of this application, referring to FIGs. 10 and 11, the thickness of the pressure relief component 10 at the connecting notch 104 is T₂, satisfying: T₂ ≥ 0.04 mm.

The thickness of the pressure relief component 10 at the connecting notch 104 may be any value greater than or equal to 0.04 mmm and less than the thickness of the pressure relief component 10 itself, for example, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, or the like. When the pressure relief component 10 is a non-uniform thickness structural member, its thickness refers to its average thickness.

The thickness of the pressure relief component 10 at the connecting notch 104 also refers to the above residual thickness.

Setting the thickness of the pressure relief component 10 at the pressure relief notch 101 within a reasonable range can ensure that, when the battery cell 12 relieves pressure, the connecting notches 104 crack later than the pressure relief notches 101, while a portion of the pressure relief component 10 is more easily actuated along the connecting notch 104, shortening the time required to form an opening of a predetermined area and thereby enabling rapid pressure relief.

According to some embodiments of this application, referring to FIGs. 10 and 11, the first region 102 is provided with a reinforcing notch 105, and a thickness of the pressure relief component 10 at the reinforcing notch 105 is greater than a thickness of the pressure relief component 10 at the pressure relief notch 101.

The thickness of the pressure relief component 10 at the reinforcing notch 105 being greater than the thickness of the pressure relief component 10 at the pressure relief notch 101 means that when the pressure relief component 10 is actuated, the reinforcing notch 105 cracks before the connecting notch 104, and since the strength at the position where the pressure relief component 10 is provided with the reinforcing notch 105 is higher than the strength at the position where the connecting notch 104 is provided on the pressure relief component 10, to a certain extent, the reinforcing notch 105 can reduce the risk of wrinkling after flipping of a portion of the pressure relief component 10.

The pressure relief component 10 is provided with connecting notches 104 and/or reinforcing notches 105.

The reinforcing notch 105 may be one segment or a plurality of segments.

In embodiments where the reinforcing notch 105 is one segment, the one segment of reinforcing notch 105 may be a straight line segment or an arc line segment. In other embodiments, the reinforcing notch 105 is an arc line segment, both ends of the arc line segment are respectively connected to the pressure relief notch 101, and at least part of the middle of the arc line segment overlaps with the connecting notch 104.

Taking the embodiment where the pressure relief component 10 is provided with both the reinforcing notch 105 and the connecting notch 104 as an example, in the embodiment where the reinforcing notch 105 is one segment, the reinforcing notch 105 may be connected to the pressure relief notch 101 and/or the connecting notch 104. In the embodiment where the reinforcing notch 105 is a plurality of segments, the reinforcing notch 105 may be arbitrarily arranged within the first region 102. In other embodiments, the reinforcing notch 105 may intersect with the connecting notch 104; such an arrangement can further significantly reduce the risk of partial bulging of the pressure relief component 10.

When the battery cell 12 relieves pressure, the pressure relief notches 101 crack prior to the reinforcing notch 105, and the reinforcing notch 105 can reduce the risk that the opened portion of the pressure relief component 10 may wrinkle, thereby resulting in an excessively small opening area and insufficient gas discharge.

According to some embodiments of this application, referring to FIGs. 10 and 11, the thickness of the pressure relief component 10 at the reinforcing notch 105 is T₃, satisfying: T₃ ≥ 0.04 mm.

The thickness of the pressure relief component 10 at the reinforcing notch 105 may be any value greater than or equal to 0.04 mmm and less than the thickness of the pressure relief component 10 itself, for example, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, or the like. When the pressure relief component 10 is a non-uniform thickness structural member, its thickness refers to its average thickness.

Setting the thickness of the pressure relief component 10 at the pressure relief notches 101 within a reasonable range can ensure that, when the battery cell 12 relieves pressure, the reinforcing notches 105 crack later than the pressure relief notches 101, while the strength of the pressure relief component 10 at the reinforcing notch 105 is higher than the strength of the pressure relief component 10 at the pressure relief notch 101, reducing the risk that the opened portion of the pressure relief component 10 may wrinkle, thereby resulting in an excessively small opening area and insufficient gas discharge.

According to some embodiments of this application, referring to FIGs. 3 and 12 to 15, the pressure relief component 10 has a first surface 1001 and a second surface 1002 oppositely disposed along its thickness direction, the first surface 1001 is provided with a groove 106 recessed toward the second surface 1002, the pressure relief notch 101 is disposed on a bottom wall of the groove 106, and a plurality of pressure relief notches 101 are arranged at intervals along a circumferential direction of a side wall of the groove 106.

In some embodiments, a wall portion of the battery cell 12 has a pressure relief hole penetrating the wall portion of the battery cell 12 along the wall portion, the pressure relief component 10 covers the pressure relief hole, and a hole wall of the pressure relief hole and the pressure relief component 10 enclose to form the groove 106, with the pressure relief component 10 being the bottom wall of the groove 106. In other embodiments, the wall portion of the battery cell 12 is provided with an outwardly protruding annular boss, an inner wall of the annular boss and the wall portion of the battery cell 12 enclose to form the groove 106, and the wall portion of the battery cell 12 is the bottom wall of the groove 106.

The plurality of pressure relief notches 101 arranged at intervals along the circumferential direction of the side wall of the groove 106 means that the pressure relief notches 101 can enclose as large a range as possible to form a larger opening for exhausts such as hot gas to pass through.

When the battery cell 12 relieves pressure, the plurality of pressure relief notches 101 arranged at intervals along the circumferential direction of the side wall of the groove 106 enable the opening formed when the pressure relief component 10 is activated to have a relatively large area, thereby making gas discharge smoother and more rapid.

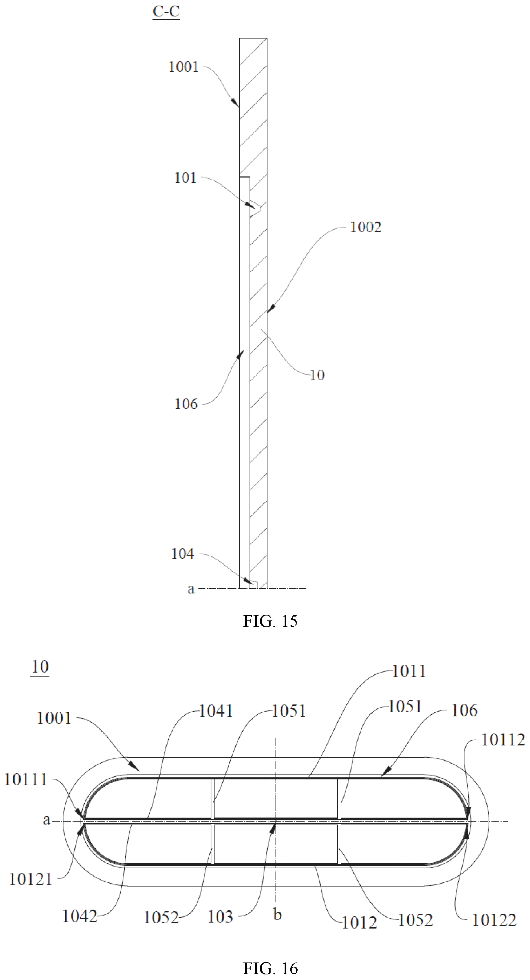

According to some embodiments of this application, referring to FIGs. 16 to 19, at least two pressure relief notches 101 include a first pressure relief notch 1011 and a second pressure relief notch 1012, both the first pressure relief notch 1011 and the second pressure relief notch 1012 are bent in a direction away from the center of the pressure relief component 10, the first pressure relief notch 1011 has a first end 10111 and a second end 10112, the second pressure relief notch 1012 has a third end 10121 close to the first end 10111 and a fourth end 10122 close to the second end 10112, the first end 10111 and the third end 10121 are arranged at intervals, and the second end 10112 and the fourth end 10122 are arranged at intervals.

In some embodiments, the first pressure relief notch 1011 and the second pressure relief notch 1012 can be understood as two segments of notches formed by an annular notch having two interruption points; due to the interruption points, the valve opening height after flipping of the first pressure relief notch 1011 and the second pressure relief notch 1012 is smaller, reducing the risk of overlap of the pressure relief component 10 with a busbar or high-voltage interface and connecting pieces. In some other embodiments, a reference line formed by connecting the above interruption points may be a central axis a of the pressure relief component in its length direction or a central axis b of the pressure relief component in its width direction.

When the battery cell 12 relieves pressure, both the first pressure relief notch 1011 and the second pressure relief notch 1012 are bent in a direction away from the center of the pressure relief component 10, which can reduce the risk that the pressure relief portion defined by the first pressure relief notch 1011 and the second pressure relief notch 1012 in the pressure relief component 10 is blocked by other portions of the housing 121, thereby resulting in an excessively small opening area. The first pressure relief notch 1011 has a first end 10111 and a second end 10112, the second pressure relief notch 1012 has a third end 10121 close to the first end 10111 and a fourth end 10122 close to the second end 10112, the first end 10111 and the third end 10121 are arranged at intervals, and the second end 10112 and the fourth end 10122 are arranged at intervals. Such a design can reduce the risk that the pressure relief portion defined by the first pressure relief notch 1011 and the second pressure relief notch 1012 may overlap with other components in the battery 100 after being opened, which may cause a short circuit of the battery 100, thereby improving the reliability of the battery 100.

According to some embodiments of this application, referring to FIGs. 16 to 19, the pressure relief component 10 is further provided with a first connecting notch 1041, one end of the first connecting notch 1041 is connected to the first end 10111, the other end of the first connecting notch 1041 is connected to the second end 10112, the first connecting notch 1041 and the first pressure relief notch 1011 enclose a first pressure relief region, and the thickness of the pressure relief component 10 at the first connecting notch 1041 is greater than the thickness of the pressure relief component 10 at the first pressure relief notch 1011.

The thickness of the pressure relief component 10 at the first connecting notch 1041 being greater than the thickness of the pressure relief component 10 at the first pressure relief notch 1011 means that when the pressure relief component 10 is actuated, the first pressure relief notch 1011 opens before the first connecting notch 1041. Similarly, the first connecting notch 1041 may also act like a crease, making the first pressure relief region easier to open.

The first connecting notch 1041 may be one segment of notch or a plurality of segments of notches. In the embodiment where the first connecting notch 1041 is a plurality of segments of notches, the first connecting notch 1041 may include at least one straight line segment and at least one arc line segment.

When the battery cell 12 undergoes thermal runaway, there may be a case where most of the first pressure relief region is actuated with the first pressure relief notch 1011 as a boundary and flips with the first connecting notch 1041 as an axis.

When the battery cell 12 relieves pressure, the first pressure relief notch 1011 cracks prior to the first connecting notch 1041, and the first pressure relief region may open along the first connecting notch 1041, shortening the time required for the first pressure relief region to form an opening and thereby enabling rapid pressure relief.

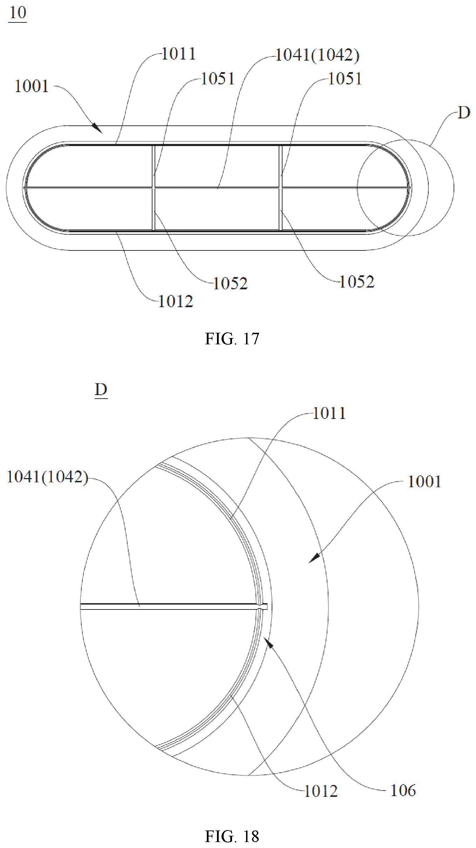

Referring to FIG. 18, when viewing the first pressure relief notch 1011 and the second pressure relief notch 1012 as two segments of notches formed after interruption of an annular notch, the first connecting notch 1041 may cross the annular notch; since the thickness of the pressure relief component 10 at the first connecting notch 1041 is greater than the thickness of the pressure relief component 10 at the first pressure relief notch 1011, the first connecting notch 1041 actually also interrupts the annular notch and forms two interruption points.

Similarly, the first connecting notch 1041 can also reduce the risk of bulging of the pressure relief component 10.

In some embodiments, the pressure relief component 10 is further provided with a first connecting notch 1041, one end of the first connecting notch 1041 is connected to the first end 10111, the other end of the first connecting notch 1041 is connected to the second end 10112, the first connecting notch 1041 and the first pressure relief notch 1011 enclose a first pressure relief region, and the thickness of the pressure relief component 10 at the first connecting notch 1041 is greater than the thickness of the pressure relief component 10 at the first pressure relief notch 1011. No connecting notch 104 is provided between the third end 10121 and the fourth end 10122.

According to some embodiments of this application, referring to FIGs. 16 to 19, at least one first reinforcing notch 1051 is disposed within the first pressure relief region, the thickness of the pressure relief component 10 at the first reinforcing notch 1051 is greater than the thickness of the pressure relief component 10 at the first pressure relief notch 1011, and the first reinforcing notch 1051 is connected to the first pressure relief notch 1011 and/or the first connecting notch 1041.

The thickness of the pressure relief component 10 at the first reinforcing notch 1051 being greater than the thickness of the pressure relief component 10 at the first pressure relief notch 1011 means that when the pressure relief component 10 is actuated, the first pressure relief notch 1011 opens before the first reinforcing notch 1051. Similarly, the first reinforcing notch 1051 can also reduce the risk of bulging of the pressure relief component 10.

The first reinforcing notch 1051 may intersect or be parallel to the first connecting notch 1041.

When the battery cell 12 relieves pressure, the first pressure relief notch 1011 cracks prior to the first reinforcing notch 1051, and the first reinforcing notch 1051 can reduce the risk that the portion of the pressure relief component 10 located in the first pressure relief region may wrinkle after being opened, thereby resulting in an excessively small opening area in the first pressure relief region and insufficient gas discharge.

According to some embodiments of this application, referring to FIGs. 16 to 19, two ends of the first reinforcing notch 1051 are connected to the first pressure relief notch 1011 and the first connecting notch 1041, respectively. When the first pressure relief region opens along the first connecting notch 1041, such a design can further reduce the risk that the portion of the pressure relief component 10 in the first pressure relief region may wrinkle when being opened, thereby further reducing the risk of an excessively small opening area and insufficient gas discharge.

According to some embodiments of this application, referring to FIGs. 16 to 19, the pressure relief component 10 is further provided with a second connecting notch 1042, one end of the second connecting notch 1042 is connected to the third end 10121, the other end of the second connecting notch 1042 is connected to the fourth end 10122, the second connecting notch 1042 and the second pressure relief notch 1012 enclose a second pressure relief region, and the thickness of the pressure relief component 10 at the second connecting notch 1042 is greater than the thickness of the pressure relief component 10 at the second pressure relief notch 1012.

The area of the second pressure relief region may be the same as or different from the area of the first pressure relief region.

The thickness of the pressure relief component 10 at the second connecting notch 1042 being greater than the thickness of the pressure relief component 10 at the second pressure relief notch 1012 means that when the pressure relief component 10 is actuated, the second pressure relief notch 1012 opens before the second connecting notch 1042. Similarly, the second connecting notch 1042 may also act like a crease, making the second pressure relief region easier to open.

The second connecting notch 1042 may be two segments of notches or a plurality of segments of notches. In the embodiment where the second connecting notch 1042 is a plurality of segments of notches, the second connecting notch 1042 may include at least two straight line segments and at least two arc line segments.

When the battery cell 12 undergoes thermal runaway, there may be a case where most of the second pressure relief region opens with the second pressure relief notch 1012 as a boundary and flips with the second connecting notch 1042 as an axis.

In some embodiments, a first reinforcing notch 1051 is disposed within the first pressure relief region, and no reinforcing notch 105 is disposed within the second pressure relief region.

When the battery cell 12 relieves pressure, the second pressure relief notch 1012 cracks prior to the second connecting notch 1042, and the second pressure relief region may open along the second connecting notch 1042, shortening the time for the second pressure relief region to form an opening and thereby enabling rapid pressure relief.

According to some embodiments of this application, referring to FIGs. 16 to 19, at least one second reinforcing notch 1052 is disposed within the second pressure relief region, the thickness of the pressure relief component 10 at the second reinforcing notch 1052 is greater than the thickness of the pressure relief component 10 at the second pressure relief notch 1012, and the second reinforcing notch 1052 is connected to the second pressure relief notch 1012 and/or the second connecting notch 1042.

The thickness of the pressure relief component 10 at the second reinforcing notch 1052 being greater than the thickness of the pressure relief component 10 at the second pressure relief notch 1012 means that when the pressure relief component 10 is actuated, the second pressure relief notch 1012 opens before the second reinforcing notch 1052. Similarly, the second reinforcing notch 1052 can also reduce the risk of bulging of the pressure relief component 10.

The second reinforcing notch 1052 may intersect or be parallel to the second connecting notch 1042.

The first reinforcing notch 1051 may be connected to or offset from the second reinforcing notch 1052.

When the battery cell 12 relieves pressure, the second pressure relief notch 1012 cracks prior to the second reinforcing notch 1052, and the second reinforcing notch 1052 can reduce the risk that the portion of the pressure relief component 10 located in the second pressure relief region may wrinkle after being opened, thereby resulting in an excessively small opening area in the second pressure relief region and insufficient gas discharge.

According to some embodiments of this application, referring to FIGs. 16 to 19, two ends of the second reinforcing notch 1052 are connected to the second pressure relief notch 1012 and the second connecting notch 1042, respectively. When the second pressure relief region opens along the second connecting notch 1042, such a design can further reduce the risk of wrinkling when the portion of the pressure relief component 10 in the second pressure relief region opens, thereby further reducing the risk of an excessively small opening area and insufficient gas discharge.

According to some embodiments of this application, referring to FIGs. 16 to 19, the first connecting notch 1041 and the second connecting notch 1042 at least partially overlap.

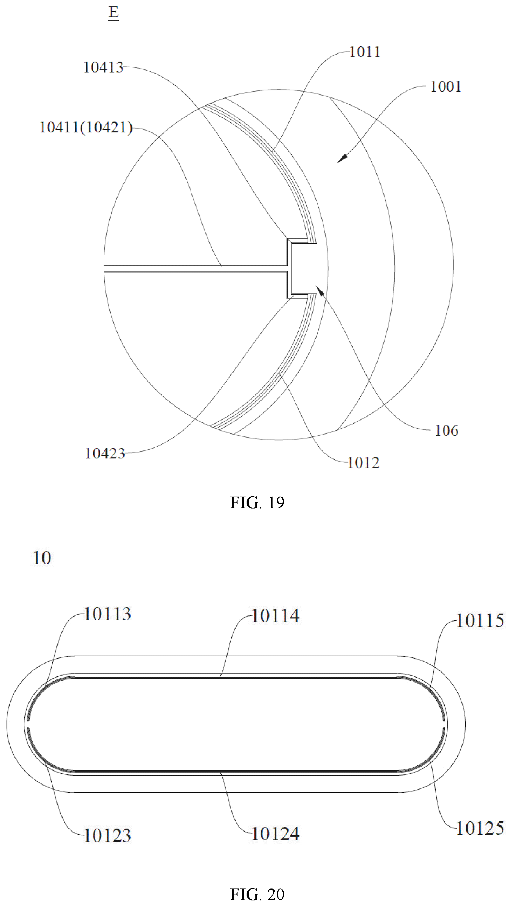

Referring to FIGs. 18 and 19, both the first connecting notch 1041 and the second connecting notch 1042 at least partially overlap.

Taking the connecting notch 104 as a notch groove as an example, the first connecting notch 1041 and the second connecting notch 1042 at least partially overlapping means that a portion of groove segments of the first connecting notch 1041 and the second connecting notch 1042 is one groove segment. Assuming the width of the groove segment is constant, when a portion of groove segments of the first connecting notch 1041 and the second connecting notch 1042 is one groove segment, compared to the embodiment where the first connecting notch 1041 and the second connecting notch 1042 are arranged at intervals, the pressure relief component 10 has a larger area available to form an opening.

The first connecting notch 1041 and the second connecting notch 1042 at least partially overlap. Such a design allows the first connecting notch 1041 and the second connecting notch 1042 to share a partial region of the pressure relief component 10, providing additional space for the first pressure relief region and the second pressure relief region and enhancing the likelihood of forming a relatively large opening for gas to pass through.

According to some embodiments of this application, referring to FIG. 18, the first connecting notch 1041 and the second connecting notch 1042 are the same notch. Such a design further enhances the likelihood of forming a relatively large opening for gas to pass through.

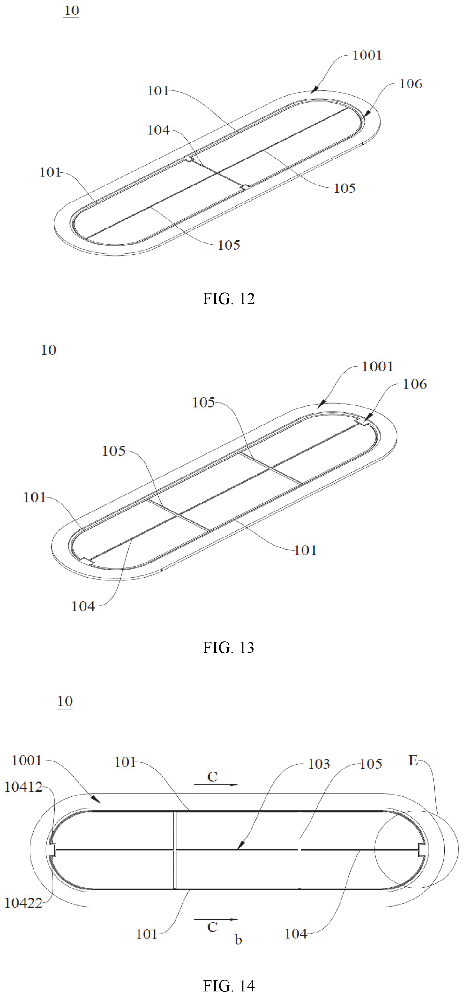

According to the embodiments of this application, referring to FIGs. 14 and 19, the first connecting notch 1041 includes a first main body segment 10411, a first connecting segment 10412, and a second connecting segment 10413, where one end of the first main body segment 10411 is connected to the first end 10111 of the first pressure relief notch 1011 via the first connecting segment 10412, and the other end of the first main body segment 10411 is connected to the second end 10112 of the first pressure relief notch 1011 via the second connecting segment 10413; and the second connecting notch 1042 includes a second main body segment 10421, a third connecting segment 10422, and a fourth connecting segment 10423, where one end of the second main body segment 10421 is connected to the third end 10121 of the second pressure relief notch 1012 via the third connecting segment 10422, the other end of the second main body segment 10421 is connected to the fourth end 10122 of the second pressure relief notch 1012 via the fourth connecting segment 10423, and the first main body segment 10411 overlaps with the second main body segment 10421.

The first connecting segment 10412, the second connecting segment 10413, the third connecting segment 10422, the fourth connecting segment 10423, the first main body segment 10411, and the second main body segment 10421 may each be one segment or a plurality of segments. In embodiments where they are a plurality of segments, they may include at least one straight line segment and at least one arc line segment. Referring to FIG. 19, both the second connecting segment 10413 and the fourth connecting segment 10423 include a plurality of straight line segments, forming an L-shaped groove segment.

Such a design remains a certain spacing between the first end 10111 and the third end 10121 as well as between the second end 10112 and the fourth end 10122, reducing the risk that, due to an excessively small spacing between the first end 10111 and the third end 10121 as well as between the second end 10112 and the fourth end 10122, the portions of the pressure relief component 10 outside the first pressure relief region and the second pressure relief region basically opens synchronously with the first pressure relief region and the second pressure relief region, leading to overlap between this portion of the pressure relief component 10 and other components in the battery 100, which may result in a short circuit of the battery 100.

According to some embodiments of this application, referring to FIG. 16, the first connecting notch 1041 and the second connecting notch 1042 are arranged at intervals.

Opening along a notch may refer, in some embodiments, to flipping of a pressure relief region with the notch as an axis. Opening with a notch as a boundary may refer to cracking at the position where the pressure relief region is bounded by the notch.

The first connecting notch 1041 and the second connecting notch 1042 arranged at intervals does not mean that the extending directions of the first connecting notch 1041 and the second connecting notch 1042 can only be parallel; the extending directions of the first connecting notch 1041 and the second connecting notch 1042 may intersect, that is, their respective extension lines intersect, while the entity portions do not intersect.

In some cases, if the portions of the pressure relief component 10 located in the first pressure relief region and the second pressure relief region detach from the wall portion of the battery cell 12, there is a higher risk of impacting other components in the battery 100 under certain impact force. The first connecting notch 1041 and the second connecting notch 1042 arranged at intervals means higher difficulty for the pressure relief component 10 to detach from the battery cell 12, reducing the above risk.

The first connecting notch 1041 and the second connecting notch 1042 arranged at intervals. Such a design reduces the likelihood of detachment of the portions of the pressure relief component 10 located in the first pressure relief region and the second pressure relief region from the battery cell 12 when the first pressure relief region opens along the first connecting notch 1041 and the second connecting notch 1042 opens along the second connecting notch 1042, reducing the risk of secondary damage to the interior of the battery 100.

According to some embodiments of this application, referring to FIG. 16, the first connecting notch 1041 and the second connecting notch 1042 are parallel to each other.

If the first connecting notch 1041 and the second connecting notch 1042 are not arranged parallel, the spacing between the first connecting notch 1041 and the second connecting notch 1042 generally has a smaller or larger value; when the spacing between the first connecting notch 1041 and the second connecting notch 1042 is smaller, the risk of interference of corresponding portions when the first pressure relief region and the second pressure relief region flip is higher.

The first connecting notch 1041 and the second connecting notch 1042 parallel to each other. Such a design reduces the risk that the portion of the pressure relief component 10 located in the first pressure relief region and the portion of the pressure relief component 10 located in the second pressure relief region may interfere with each other when being opened, leading to excessively small opening areas in the first pressure relief region and the second pressure relief region.

According to some embodiments of this application, referring to FIGs. 4 to 8 and 14 to 16, the first pressure relief notch 1011 and the second pressure relief notch 1012 are symmetrically disposed with respect to a central axis a of the pressure relief component in its length direction or a central axis b of the pressure relief component in its width direction.

In some embodiments, the shape of the pressure relief component 10 is circular, the central axis a of the pressure relief component 10 in its length direction may refer to the direction of any diameter of the circle, and the central axis b of the pressure relief component 10 in its width direction may refer to the direction of a diameter perpendicular to the above diameter.

Referring to FIG. 12, the first pressure relief notch 1011 and the second pressure relief notch 1012 are symmetrically disposed with respect to the central axis b of the pressure relief component in its width direction.

Referring to FIG. 13, the first pressure relief notch 1011 and the second pressure relief notch 1012 are symmetrically disposed with respect to the central axis a of the pressure relief component in its length direction.

The first pressure relief notch 1011 and the second pressure relief notch 1012 symmetrically disposed with respect to a central axis a of the pressure relief component in its length direction or a central axis b of the pressure relief component in its width direction means that the distances of the first pressure relief notch 1011 and the second pressure relief notch 1012 from the center 103 of the pressure relief component are substantially the same, and the difficulty of cracking of the first pressure relief notch 1011 and the second pressure relief notch 1012 under impact force is substantially the same, reducing the risk that one of the first pressure relief notch 1011 or the second pressure relief notch 1012 cracks first, gas flows out from the cracked opening, and the other receives insufficient force and fails to open.

The first pressure relief notch 1011 and the second pressure relief notch 1012 symmetrically disposed with respect to the central axis a of the pressure relief component in its length direction or the central axis b of the pressure relief component in its width direction. Such a design ensures that the ease of cracking of the first pressure relief notch 1011 and the second pressure relief notch 1012 is substantially consistent, enabling the first pressure relief notch 1011 and the second pressure relief notch 1012 to crack in a timely manner and improving pressure relief efficiency.

According to some embodiments of this application, referring to FIG. 20, the first pressure relief notch 1011 includes a first straight line segment 10114, a first arc line segment 10113, and a second arc line segment 10115, with two ends of the first straight line segment 10114 connected to the first arc line segment 10113 and the second arc line segment 10115, respectively. The second pressure relief notch 1012 includes a second straight line segment 10124, a third arc line segment 10123, and a fourth arc line segment 10125, with two ends of the second straight line segment 10124 connected to the third arc line segment 10123 and the fourth arc line segment 10125, respectively.

Under the same size, an arc line segment compared to a straight line segment can enclose a larger area; it can be understood that the area enclosed by a straight line between two points is smaller than the area enclosed by an arc line between two points.

The provision of the first arc line segment 10113, the second arc line segment 10115, the third arc line segment 10123, and the fourth arc line segment 10125 facilitates enclosing a relatively large area. Consequently, the opening formed when the battery cell 12 relieves pressure has a relatively large area, thereby enabling smooth pressure relief.

According to some embodiments of this application, referring to FIGs. 3 and 12 to 15, the pressure relief component 10 has a first surface 1001 and a second surface 1002 oppositely disposed along its thickness direction, the first surface 1001 is provided with a groove 106 recessed toward the second surface 1002, the first pressure relief notch 1011 and the second pressure relief notch 1012 are disposed on a bottom wall of the groove 106, and both the first pressure relief notch 1011 and the second pressure relief notch 1012 extend along a circumferential direction of a side wall of the groove 106.

Both the first pressure relief notch 1011 and the second pressure relief notch 1012 extending along the circumferential direction of the side wall of the groove 106 means that the first pressure relief notch 1011 and the second pressure relief notch 1012 can enclose as large a range as possible to form a larger opening for passage of exhausts such as hot gas.

The first pressure relief notch 1011 and the second pressure relief notch 1012 arranged at intervals along the circumferential direction of the side wall of the groove 106 enable the opening formed when the pressure relief component 10 is activated to have a relatively large area, thereby making gas discharge smoother and more rapid.

According to some embodiments of this application, this application provides a battery cell 12 including the pressure relief component 10 described in any of the above solutions, where the pressure relief component 10 is configured to relieve internal pressure of the battery cell 12.

The battery cell 12 includes a housing 121, and the pressure relief component 10 is disposed on the housing 121. Optionally, the structure where the pressure relief component 10 is disposed on the housing 121 of the battery cell 12 may be various; the pressure relief component 10 may be a structure separate from the housing 121, or the pressure relief component 10 may be one wall of the housing 121. When the pressure relief component 10 and the housing 121 are separate, that is, the housing 121 is provided with a pressure relief hole for mounting the pressure relief component 10, the pressure relief component 10 is connected to the housing 121 and covers the pressure relief hole, and the connection method between the pressure relief component 10 and the housing 121 may be various, such as welding or snapping. Similarly, the pressure relief component 10 may be mounted on the end cover 1211 of the housing 121 or on the case body 1212 of the housing 121. When the pressure relief component 10 is one wall of the housing 121, that is, the pressure relief component 10 is integrated on the housing 121 and forms one wall of the housing 121, the pressure relief component 10 may be the end cover 1211 of the housing 121 or one wall of the case body 1212 of the housing 121.

According to some embodiments of this application, the battery cell 12 further includes a housing 121 having a wall portion. The pressure relief component 10 is the wall portion.

The housing 121 has a wall portion, and the pressure relief component 10 is the wall portion, that is, the pressure relief component 10 is one wall of the housing 121, meaning that the pressure relief component 10 is integrated on the housing 121; the pressure relief component 10 may be the end cover 1211 of the housing 121, enabling the pressure relief component 10 to close the opening of the case body 1212; of course, the pressure relief component 10 may also be one wall of the case body 1212, enabling the pressure relief component 10 to enclose with other walls of the case body 1212 to form an accommodating cavity for accommodating the electrode assembly 122.

The pressure relief component 10 is the end cover 1211 of the housing 121 of the battery cell 12, and the pressure relief component 10 is connected to the case body 1212 and covers the opening of the case body 1212.

The pressure relief component 10 is one wall of the case body 1212 of the housing 121, and the pressure relief component 10 is connected to other walls of the case body 1212 to enclose an accommodating cavity for accommodating the electrode assembly 122; in this embodiment, electrode terminals may be mounted on the case body 1212 or on the end cover 1211.

It should be noted that in embodiments where the pressure relief component 10 is the end cover 1211 or one wall of the case body 1212 of the housing 121, the pressure relief portion of the pressure relief component 10 may be an integral structure with a reinforcing portion or a separate structure.

In some embodiments, the battery cell 12 may have other structures, for example, the battery cell 12 further includes a housing 121 having a wall portion provided with a pressure relief hole, and the pressure relief component 10 is mounted on the wall portion and covers the pressure relief hole.

The housing 121 has a wall portion, and the pressure relief component 10 is the wall portion of the housing 121, that is, the pressure relief component 10 is one wall of the housing 121, allowing direct processing of pressure relief notches 101 on the housing 121, saving processing steps and costs.

According to some embodiments of this application, the battery cell 12 further includes a housing 121 having a wall portion provided with a pressure relief hole. The pressure relief component 10 is mounted on the wall portion and covers the pressure relief hole.

The pressure relief component 10 mounted on the wall portion and covering the pressure relief hole means that the pressure relief component 10 is an independent component from the housing 121, that is, the pressure relief component 10 and the housing 121 are separately provided; the pressure relief component 10 is connected to the wall portion of the housing 121 by processes such as welding and covers the pressure relief hole formed on the wall portion of the housing 121, so that when the pressure relief portion of the pressure relief component 10 is destroyed, the battery cell 12 can relieve internal pressure of the battery cell 12 through the pressure relief hole.

The pressure relief component 10 and the housing 121 separately provided, and the pressure relief component 10 being an independent component mounted on one wall of the housing 121; this structure, on one hand, facilitates reducing assembly difficulty between the pressure relief component 10 and the housing 121, improving production efficiency of the battery cell 12. On the other hand, pressure relief notches 101 can be pre-processed on the pressure relief component 10 before being assembled with the pressure relief hole, thus reducing the risk of excessive deformation of the housing 121 caused by directly processing notches on the housing 121.

According to some embodiments of this application, the housing 121 includes a case body 1212 and an end cover 1211, an accommodating cavity with an opening is formed inside the case body 1212, and the accommodating cavity is used to accommodate an electrode assembly 122. The end cover 1211 closes the opening. The end cover 1211 is the wall portion.

The end cover 1211 being the wall portion means that the pressure relief component 10 is the end cover 1211 or the pressure relief component 10 is mounted on the end cover 1211, that is, in the embodiment where the pressure relief component 10 is a wall portion of the housing 121, the pressure relief component 10 is the end cover 1211 of the housing 121; in the embodiment where the pressure relief component 10 is mounted on a wall portion of the housing 121, the pressure relief hole is formed on the end cover 1211, and the pressure relief component 10 is mounted on the end cover 1211 and covers the pressure relief hole.

By configuring the wall portion of the housing 121 as the end cover 1211 of the housing 121 for closing the opening of the case body 1212, a battery cell 12 with this structure facilitates the mounting of the pressure relief portion on the end cover 1211, thereby effectively reducing the processing difficulty of the battery cell 12 and improving the production efficiency of the battery cell 12.

According to some embodiments of this application, the housing 121 includes a case body 1212 and an end cover 1211, an accommodating cavity with an opening is formed inside the housing 121, and the accommodating cavity is used to accommodate an electrode assembly 122. The end cover 1211 closes the opening. The case body 1212 includes the wall portion.

The case body 1212 including the wall portion means that the pressure relief component 10 is one wall of the case body 1212 or the pressure relief component 10 is mounted on one wall of the case body 1212, that is, in the embodiment where the pressure relief component 10 is a wall portion of the housing 121, the pressure relief component 10 is one wall of the case body 1212; in the embodiment where the pressure relief component 10 is mounted on a wall portion of the housing 121, the pressure relief hole is formed on one wall of the case body 1212, and the pressure relief component 10 is mounted on one wall of the case body 1212 and covers the pressure relief hole.

The case body 1212 may include an integrally formed side wall and bottom wall, the side wall is disposed around the bottom wall, along the thickness direction of the bottom wall, one end of the side wall is connected to the bottom wall, and the other end encloses to form an opening, the bottom wall is oppositely disposed from the end cover 1211, the side wall and the bottom wall jointly define an accommodating cavity for accommodating the electrode assembly 122, and the end cover 1211 closes the opening. The side wall includes four sequentially connected walls, including two oppositely disposed first walls and two oppositely disposed second walls, the first wall being the surface with the largest area among outer surfaces of the battery cell 12. Optionally, the wall portion may be the bottom wall of the case body 1212, or the first wall of the case body 1212, or the second wall of the case body 1212. In some embodiments, the wall portion is the first wall of the case body 1212; since the outer surface area of the first wall is the largest, pressure relief notches 101 can be arranged more flexibly, with lower processing and design difficulty for the pressure relief notches 101.

By configuring the wall portion of the housing 121 as one wall of the case body 1212, a battery cell 12 with this structure can reduce the impact of stress induced when the end cover 1211 and the case body 1212 are connected to each other on the pressure relief notches 101, thereby reducing abnormal cracking of the pressure relief notches 101 and improving the reliability of the battery cell 12.

According to some embodiments of this application, this application provides a battery 100 including the battery cell 12 described in any of the above solutions.

According to some embodiments of this application, this application provides an electric device including the battery cell 12 described in any of the above solutions, where the battery cell 12 is configured to provide electrical energy; or it includes the battery 100 described in any of the above solutions, where the battery 100 is configured to provide electrical energy.

According to some embodiments of this application, referring to FIGs. 4, 13 to 15, 19, and 20, this application provides a pressure relief component 10 for a battery cell 12, where the pressure relief component 10 is provided with at least two pressure relief notches 101, each pressure relief notch 101 and connecting lines at two ends of the pressure relief notch 101 enclose a first region 102, a plurality of first regions 102 are arranged at intervals, and a connecting line of at least one first region 102 is located on a side of the first region 102 close to a center 103 of the pressure relief component.

At least two pressure relief notches 101 include a first pressure relief notch 1011 and a second pressure relief notch 1012, the pressure relief component 10 has a first surface 1001 and a second surface 1002 oppositely disposed along its thickness direction, the first surface 1001 is provided with a groove 106 recessed toward the second surface 1002, the first pressure relief notch 1011 and the second pressure relief notch 1012 are disposed on a bottom wall of the groove 106, and both the first pressure relief notch 1011 and the second pressure relief notch 1012 extend along a circumferential direction of a side wall of the groove 106. The pressure relief component 10 is disposed on an end cover 1211 of the battery cell 12, the end cover 1211 is provided with a pressure relief hole, and the pressure relief component 10 covers the pressure relief hole. The end cover 1211 is further provided with an annular boss disposed around the pressure relief hole, and an inner wall of the annular boss and the pressure relief component 10 jointly form the above groove 106.

Both the first pressure relief notch 1011 and the second pressure relief notch 1012 are bent in a direction away from the center of the pressure relief component 10, the first pressure relief notch 1011 has a first end 10111 and a second end 10112, the second pressure relief notch 1012 has a third end 10121 close to the first end 10111 and a fourth end 10122 close to the second end 10112, the first end 10111 and the third end 10121 are arranged at intervals, and the second end 10112 and the fourth end 10122 are arranged at intervals.

The first pressure relief notch 1011 includes a first straight line segment 10114, a first arc line segment 10113, and a second arc line segment 10115, with two ends of the first straight line segment 10114 connected to the first arc line segment 10113 and the second arc line segment 10115, respectively. The second pressure relief notch 1012 includes a second straight line segment 10124, a third arc line segment 10123, and a fourth arc line segment 10125, with two ends of the second straight line segment 10124 connected to the third arc line segment 10123 and the fourth arc line segment 10125, respectively.

The pressure relief component 10 is further provided with a first connecting notch 1041, one end of the first connecting notch 1041 is connected to the first end 10111, the other end of the first connecting notch 1041 is connected to the second end 10112, the first connecting notch 1041 and the first pressure relief notch 1011 enclose a first pressure relief region, and the thickness of the pressure relief component 10 at the first connecting notch 1041 is greater than the thickness of the pressure relief component 10 at the first pressure relief notch 1011. The pressure relief component 10 is further provided with a second connecting notch 1042, one end of the second connecting notch 1042 is connected to the third end 10121, the other end of the second connecting notch 1042 is connected to the fourth end 10122, the second connecting notch 1042 and the second pressure relief notch 1012 enclose a second pressure relief region, and the thickness of the pressure relief component 10 at the second connecting notch 1042 is greater than the thickness of the pressure relief component 10 at the second pressure relief notch 1012.

The first connecting notch 1041 includes a first main body segment 10411, a first connecting segment 10412, and a second connecting segment 10413, where one end of the first main body segment 10411 is connected to the first end 10111 of the first pressure relief notch 1011 via the first connecting segment 10412, and the other end of the first main body segment 10411 is connected to the second end 10112 of the first pressure relief notch 1011 via the second connecting segment 10413; and the second connecting notch 1042 includes a second main body segment 10421, a third connecting segment 10422, and a fourth connecting segment 10423, where one end of the second main body segment 10421 is connected to the first end 10121 of the second pressure relief notch 1012 via the third connecting segment 10422, the other end of the second main body segment 10421 is connected to the second end 10112 of the second pressure relief notch 1012 via the fourth connecting segment 10423, and the first main body segment 10411 overlaps with the second main body segment 10421.

At least one first reinforcing notch 1051 is disposed within the first pressure relief region, the thickness of the pressure relief component 10 at the first reinforcing notch 1051 is greater than the thickness of the pressure relief component 10 at the first pressure relief notch 1011, and the first reinforcing notch 1051 is connected to the first pressure relief notch 1011 and the first connecting notch 1041. At least one second reinforcing notch 1052 is disposed within the second pressure relief region, the thickness of the pressure relief component 10 at the second reinforcing notch 1052 is greater than the thickness of the pressure relief component 10 at the second pressure relief notch 1012, and the second reinforcing notch 1052 is connected to the second pressure relief notch 1012 and the second connecting notch 1042.

The first pressure relief notch 1011 and the second pressure relief notch 1012 are symmetrically disposed with respect to the central axis a in the length direction of the pressure relief component.

It should be noted that the above embodiments are only for illustrating the technical solution of this application and not for limitation; although this application has been described in detail with reference to the foregoing embodiments, those of ordinary skill in the art should understand that modifications can still be made to the technical solutions recorded in the foregoing embodiments, or equivalent replacements can be made to some or all of the technical features therein; and these modifications or replacements do not make the essence of the corresponding technical solutions depart from the scope of the technical solutions of the embodiments of this application, and should all be covered within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A pressure relief component used for a battery cell, wherein the pressure relief component is provided with at least two pressure relief notches, wherein each pressure relief notch and connecting lines at two ends of the pressure relief notch enclose a first region, wherein a plurality of first regions are arranged at intervals, and a connecting line of at least one first region is located on a side of the first region adjacent to a center of the pressure relief component.

2. The pressure relief component according to claim 1, wherein a plurality of first regions are arranged at intervals around the center of the pressure relief component, and each pressure relief notch is bent in a direction away from the center of the pressure relief component.

3. The pressure relief component according to any one of claims 1 and 2, wherein a thickness of the pressure relief component at the pressure relief notch is T₁, satisfying: T₁ ≥ 0.03 mm.

4. The pressure relief component according to any one of claims 1 to 3, wherein the pressure relief component is provided with at least two connecting notches, wherein the connecting notches are in one-to-one correspondence with the pressure relief notches, two ends of each pressure relief notch are connected by the connecting notch, and a thickness of the pressure relief component at the connecting notch is greater than a thickness of the pressure relief component at the pressure relief notch.

5. The pressure relief component according to claim 4, wherein the thickness of the pressure relief component at the connecting notch is T₂, satisfying: T₂ ≥ 0.04 mm.

6. The pressure relief component according to any one of claims 1 to 5, wherein the first region is provided with a reinforcing notch, and a thickness of the pressure relief component at the reinforcing notch is greater than a thickness of the pressure relief component at the pressure relief notch.

7. The pressure relief component according to claim 6, wherein the thickness of the pressure relief component at the reinforcing notch is T₃, satisfying: T₃ ≥ 0.04 mm.

8. The pressure relief component according to any one of claims 1 to 7, wherein the pressure relief component has a first surface and a second surface oppositely disposed along its thickness direction, the first surface being provided with a groove recessed toward the second surface, wherein the pressure relief notch is disposed on a bottom wall of the groove, and a plurality of pressure relief notches are arranged at intervals along a circumferential direction of a side wall of the groove.

9. The pressure relief component according to any one of claims 1 to 8, wherein the at least two pressure relief notches comprise a first pressure relief notch and a second pressure relief notch, wherein:
both the first pressure relief notch and the second pressure relief notch are bent in a direction away from the center of the pressure relief component; and
the first pressure relief notch has a first end and a second end, and the second pressure relief notch has a third end close to the first end and a fourth end close to the second end, wherein the first end and the third end are spaced apart, and the second end and the fourth end are spaced apart.

10. The pressure relief component according to claim 9, wherein the pressure relief component is further provided with a first connecting notch, wherein:
one end of the first connecting notch is connected to the first end, and the other end of the first connecting notch is connected to the second end;
the first connecting notch and the first pressure relief notch enclose a first pressure relief region; and
a thickness of the pressure relief component at the first connecting notch is greater than a thickness of the pressure relief component at the first pressure relief notch.

11. The pressure relief component according to claim 10, wherein at least one first reinforcing notch is disposed within the first pressure relief region, wherein the thickness of the pressure relief component at the first reinforcing notch is greater than the thickness of the pressure relief component at the first pressure relief notch, and the first reinforcing notch is connected to the first pressure relief notch and/or the first connecting notch.

12. The pressure relief component according to claim 11, wherein two ends of the first reinforcing notch are connected to the first pressure relief notch and the first connecting notch, respectively.

13. The pressure relief component according to any one of claims 10 to 12, wherein the pressure relief component is further provided with a second connecting notch, wherein:
one end of the second connecting notch is connected to the third end, and the other end of the second connecting notch is connected to the fourth end;
the second connecting notch and the second pressure relief notch enclose a second pressure relief region; and
a thickness of the pressure relief component at the second connecting notch is greater than a thickness of the pressure relief component at the second pressure relief notch.

14. The pressure relief component according to claim 13, wherein at least one second reinforcing notch is disposed within the second pressure relief region, wherein the thickness of the pressure relief component at the second reinforcing notch is greater than the thickness of the pressure relief component at the second pressure relief notch, and the second reinforcing notch is connected to the second pressure relief notch and/or the second connecting notch.

15. The pressure relief component according to claim 14, wherein two ends of the second reinforcing notch are connected to the second pressure relief notch and the second connecting notch, respectively.

16. The pressure relief component according to any one of claims 13 to 15, wherein the first connecting notch and the second connecting notch at least partially overlap.

17. The pressure relief component according to claim 16, wherein the first connecting notch and the second connecting notch are the same notch.

18. The pressure relief component according to any one of claims 13 to 15, wherein:
the first connecting notch comprises a first main body segment, a first connecting segment, and a second connecting segment, wherein one end of the first main body segment is connected to the first end of the first pressure relief notch via the first connecting segment, and the other end of the first main body segment is connected to the second end of the first pressure relief notch via the second connecting segment; and
the second connecting notch comprises a second main body segment, a third connecting segment, and a fourth connecting segment, wherein one end of the second main body segment is connected to the first end of the second pressure relief notch via the third connecting segment, and the other end of the second main body segment is connected to the second end of the second pressure relief notch via the fourth connecting segment,
wherein the first main body segment overlaps with the second main body segment.

19. The pressure relief component according to any one of claims 13 to 15, wherein the first connecting notch and the second connecting notch are spaced apart.

20. The pressure relief component according to claim 19, wherein the first connecting notch and the second connecting notch are parallel to each other.

21. The pressure relief component according to any one of claims 9 to 20, wherein the first pressure relief notch and the second pressure relief notch are symmetrically disposed with respect to a central axis of the pressure relief component in its length direction or a central axis of the pressure relief component in its width direction.

22. The pressure relief component according to any one of claims 9 to 20, wherein:
the first pressure relief notch comprises a first straight line segment, a first arc line segment, and a second arc line segment, with two ends of the first straight line segment connected to the first arc line segment and the second arc line segment, respectively; and
the second pressure relief notch comprises a second straight line segment, a third arc line segment, and a fourth arc line segment, with two ends of the second straight line segment connected to the third arc line segment and the fourth arc line segment, respectively.

23. The pressure relief component according to any one of claims 9 to 20, wherein the pressure relief component has a first surface and a second surface oppositely disposed along its thickness direction, the first surface being provided with a groove recessed toward the second surface, wherein the first pressure relief notch and the second pressure relief notch are disposed on a bottom wall of the groove, and both the first pressure relief notch and the second pressure relief notch extend along a circumferential direction of a side wall of the groove.

24. A battery cell, comprising the pressure relief component according to any one of claims 1 to 23, wherein the pressure relief component is configured to relieve internal pressure of the battery cell.

25. The battery cell according to claim 24, further comprising a housing having a wall portion, wherein the pressure relief component is the wall portion.

26. The battery cell according to claim 24, further comprising a housing having a wall portion, wherein:
the wall portion is provided with a pressure relief hole; and
the pressure relief component is mounted on the wall portion and covers the pressure relief hole.

27. The battery cell according to claim 25 or 26, wherein the housing comprises:
a case body with an accommodating cavity having an opening formed inside, wherein the accommodating cavity is configured to accommodate an electrode assembly; and
an end cover closing the opening,
wherein the end cover is the wall portion.

28. The battery cell according to claim 25 or 26, wherein the housing comprises:
a case body with an accommodating cavity having an opening formed inside, wherein the accommodating cavity is configured to accommodate an electrode assembly; and
an end cover closing the opening,
wherein the case body comprises the wall portion.

29. A battery, comprising the battery cell according to any one of claims 24 to 28.

30. An electric device, comprising:
the battery cell according to any one of claims 24 to 28, wherein the battery cell is configured to provide electrical energy; or
the battery according to claim 29, wherein the battery is configured to provide electrical energy.
